(19)

Europäisches
Patentamt
European
Patent Office
Office européen
des brevets

(11)    **EP 3 474 624 B1**

(12)    **EUROPEAN PATENT SPECIFICATION**

(45) Date of publication and mention
of the grant of the patent:
**26.08.2020   Bulletin 2020/35**

(51) Int Cl.:
**H04W 74/08** *(2009.01)*        **H04W 48/14** *(2009.01)*
**H04W 48/12** *(2009.01)*

(21) Application number: **18211273.0**

(22) Date of filing: **09.02.2018**

(54) **METHOD AND APPARATUS FOR RANDOM ACCESS PROCEDURE FOR SYSTEM INFORMATION REQUEST IN A WIRELESS COMMUNICATION SYSTEM**

VERFAHREN UND VORRICHTUNG FÜR DIREKTZUGRIFFSVERFAHREN FÜR SYSTEMINFORMATIONSANFRAGE IN EINEM DRAHTLOSKOMMUNIKATIONSSYSTEM

PROCÉDÉ ET APPAREIL POUR UNE PROCÉDURE D'ACCÈS ALÉATOIRE D'UNE DEMANDE D'INFORMATIONS SYSTÈME DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2017   US 201762473684 P**

(43) Date of publication of application:
**24.04.2019   Bulletin 2019/17**

(62) Document number(s) of the earlier application(s) in accordance with Art. 76 EPC:
**18156048.3 / 3 379 886**

(73) Proprietor: **ASUSTek Computer Inc.**
**Taipei City 112 (TW)**

(72) Inventors:
• **OU, Meng-Hui**
  **Taipei City 112 (TW)**
• **GUO, Yu-Hsuan**
  **Taipei City 112 (TW)**

(74) Representative: **Hoefer & Partner Patentanwälte mbB**
**Pilgersheimer Straße 20**
**81543 München (DE)**

(56) References cited:
**WO-A1-2016/198909**

• **XIAOMI: "SI Request Mechanism for On demand SI", 3GPP DRAFT; R2-1700038 SI REQUEST MECHANISM FOR ON DEMAND SI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170117 - 20170119 17 January 2017 (2017-01-17), XP051210625, Retrieved from the Internet: URL:http://www.3gpp.org/ftp/Meetings_3GPP_ SYNC/RAN2/Docs/ [retrieved on 2017-01-17]**
• **FUJITSU: "Considerations about on-demand SI acquiring procedure", 3GPP DRAFT; R2-1701397 CONSIDERATIONS ABOUT ON-DEMAND SI ACQUIRING PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Athens, Greece; 20170213 - 20170217 12 February 2017 (2017-02-12), XP051212054, Retrieved from the Internet: URL:http://www.3gpp.org/ftp/Meetings_3GPP_ SYNC/RAN2/Docs/ [retrieved on 2017-02-12]**

**(Cont. next page)**

- CATT: "On-demand system information delivery mechanism", 3GPP DRAFT; R2-1700210, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170117 - 20170119 17 January 2017 (2017-01-17), XP051210794, Retrieved from the Internet: URL:http://www.3gpp.org/ftp/Meetings_3GPP_ SYNC/RAN2/Docs/ [retrieved on 2017-01-17]
- QUALCOMM INCORPORATED: "Delivery of System information", 3GPP DRAFT; R2-1700587 NR DELIVERY OF SI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20170117 - 20170119 17 January 2017 (2017-01-17), XP051211159, Retrieved from the Internet: URL:http://www.3gpp.org/ftp/Meetings_3GPP_ SYNC/RAN2/Docs/ [retrieved on 2017-01-17]
- SAMSUNG: "System Information Signalling Design in NR", 3GPP DRAFT; R2-164693_SYSTEM INFORMATION SIGNALING DESIGN IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126466, Retrieved from the Internet: URL:http://www.3gpp.org/ftp/Meetings_3GPP_ SYNC/RAN2/Docs/ [retrieved on 2016-08-21]

## Description

This disclosure generally relates to wireless communication networks, and more particularly, to methods and apparatuses for random access procedures for a system information request in a wireless communication system, in particular to a method for a user equipment as defined in the pre-characterizing part of independent claim 1, a method for a network node as defined in the pre-characterizing part of independent claim 6, a user equipment as defined in the pre-characterizing part of independent claim 14, and a network node as defined in the pre-characterizing part of independent claim 15. Such methods and apparatuses are disclosed in WO 2016/198909 A1 and 3GPP documents R2-1700038, R2-170397, R2-1700210, R2-1700587, and R2-164693.

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

## SUMMARY

Methods and apparatuses for random access procedures for a system information request in a wireless communication system are disclosed herein and defined in the independent claims. The dependent claims define preferred embodiments thereof In one method, a user equipment (UE) initiates a random access procedure to request a system information. The UE transmits a random access preamble during the random access procedure. The UE monitors a control channel for a random access response immediately after transmitting the random access preamble for a request of the system information.

## BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 illustrates one exemplary beam concept in 5G cell as shown in 3GPP R2-164306.

FIG. 6 illustrates stand-alone, co-sited with LTE, and a centralized baseband as shown in 3GPP TR 38.804 v0.8.0.

FIG. 7 illustrates a centralized baseband with low performance transport and shared RAN as shown in 3GPP TR 38.804 v0.8.0.

FIG. 8 illustrates different deployment scenarios with a single TRP cell as shown in 3GPP R2-163879.

FIG. 9 illustrates different deployment scenarios with multiple TRP cells as shown in 3GPP R2-163879.

FIG. 10 illustrates one exemplary 5G cell as shown in 3GPP R2-162210.

FIG. 11 illustrates one exemplary LTE cell and NR cell as shown in 3GPP R2-163471.

FIG. 12 is a reproduction of Figure 10.1.5.1-1 from 3GPP TS 36.300 V14.1.0 illustrating a contention based Random Access Procedure.

FIG. 13 is a reproduction of Figure 10.1.5.2-1 from 3GPP TS 36.300 V14.1.0 illustrating a non-contention based Random Access Procedure.

FIG. 14 is a reproduction of Figure 6.1.5-1 from 3GPP TS 36.321 V14.1.0 illustrating an E/T/RAPID MAC subheader.

FIG. 15 is a reproduction of Figure 6.1.5-2 from 3GPP TS 36.321 V14.1.0 illustrating an E/T/R/R/BI MAC subheader.

FIG. 16 is a reproduction of Figure 6.1.5-3 from 3GPP TS 36.321 V14.1.0 illustrating a MAC RAR.

FIG. 17 is a reproduction of Figure 6.1.5-3a from 3GPP TS 36.321 V14.1.0 illustrating a MAC RAR for PRACH enhanced coverage level 2 or 3.

FIG. 18 is a reproduction of Figure 6.1.5-4 from 3GPP TS 36.321 V14.1.0 illustrating an example of a MAC PDU consisting of a MAC header and MAC RARs.

FIG. 19 illustrates one example of a random access procedure.

FIG. 20 illustrates an exemplary of a SI indication.

FIG. 21 illustrates one example of a random access procedure.

FIG. 22 is a flow diagram for one exemplary embodiment from the perspective of a UE.

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, 3GPP NR (New Radio), or some other modulation techniques.

In particular, the exemplary wireless communication systems devices described below may be designed to support one or more standards such as the standard offered by a consortium named "3rd Generation Partnership Project" referred to herein as 3GPP, including: R2-162709, "Beam support in NR"; R3-160947, TR 38.801 V0.1.0, "Study on New Radio Access Technology; Radio Access Architecture and Interfaces"; R2-164306, "Summary of email discussion [93bis#23][NR] Deployment scenarios"; RAN2#94 meeting minutes; TR 38.804 v0.8.0, "Study on New Radio Access Technology; Radio Interface Protocol Aspects (Release 14)"; TS 36.321 V14.1.0, "E-UTRA; MAC protocol specification"; TS 36.213 V14.1.0, "E-UTRA Physical layer procedures"; TS 36.300 V14.1.0, "E-UTRA and E-UTRAN; Overall description; Stage 2"; and TS 36.331 V14.0.0, "E-UTRA; RRC protocol specification."

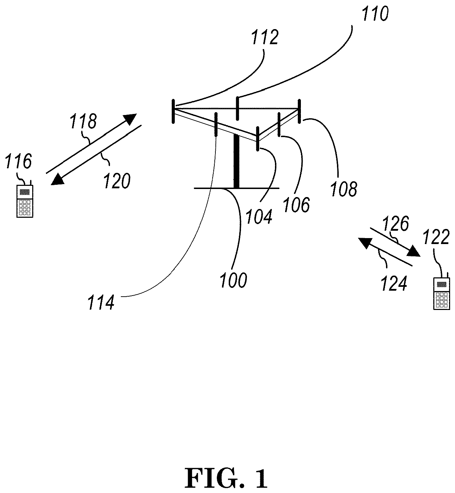

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

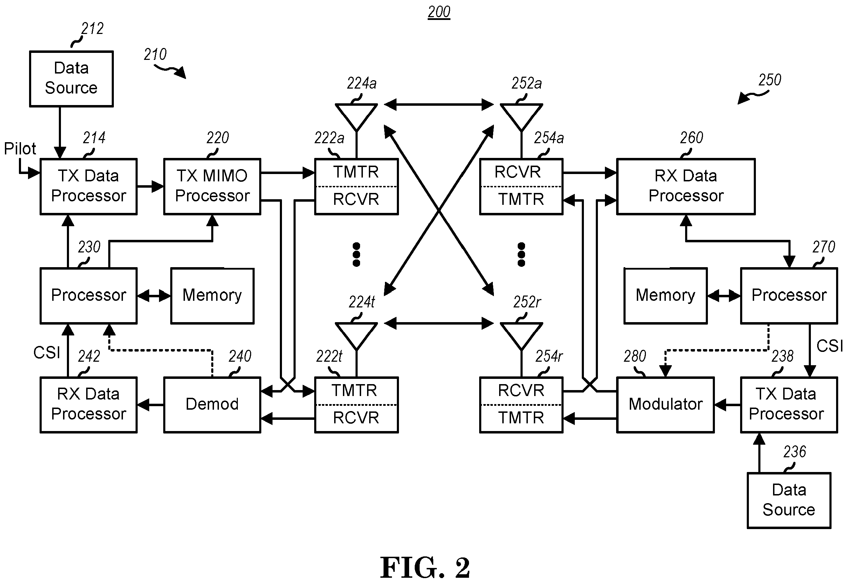

FIG. 2 is a simplified block diagram of an embodiment of a transmitter system 210 (also known as the access network) and a receiver system 250 (also known as access terminal (AT) or user equipment (UE) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

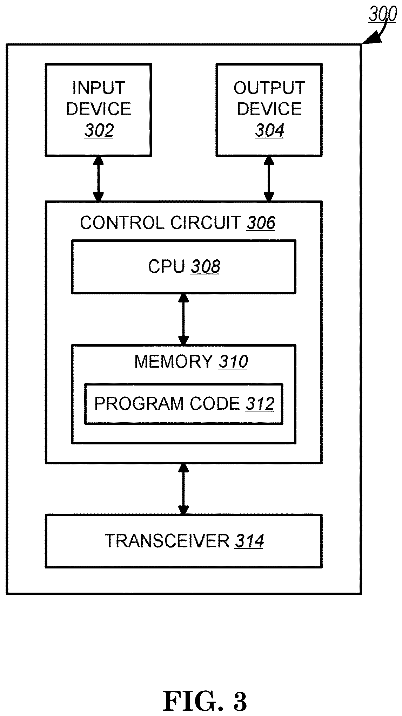

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the NR system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

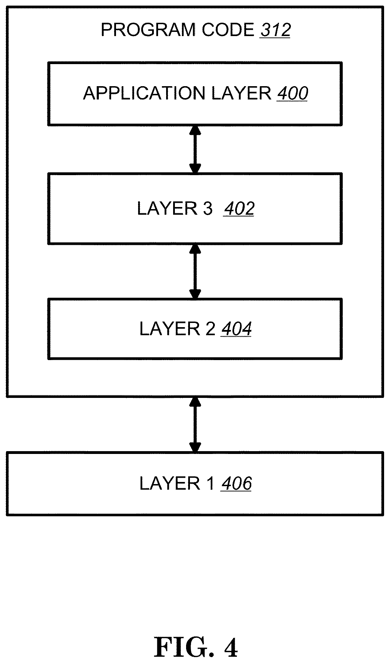

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE, LTE-A, or NR system, the Layer 2 portion 404 may include a Radio Link Control (RLC) layer and a Medium Access Control (MAC) layer. The Layer 3 portion 402 may include a Radio Resource Control (RRC) layer.

3GPP standardization activities on next generation (i.e. 5G) access technology have been launched since March 2015. The next generation access technology aims to support the following three families of usage scenarios for satisfying both the urgent market needs and the more long-term requirements set forth by the ITU-R IMT-2020:

- eMBB (enhanced Mobile Broadband)
- mMTC (massive Machine Type Communications)
- URLLC (Ultra-Reliable and Low Latency Communications).

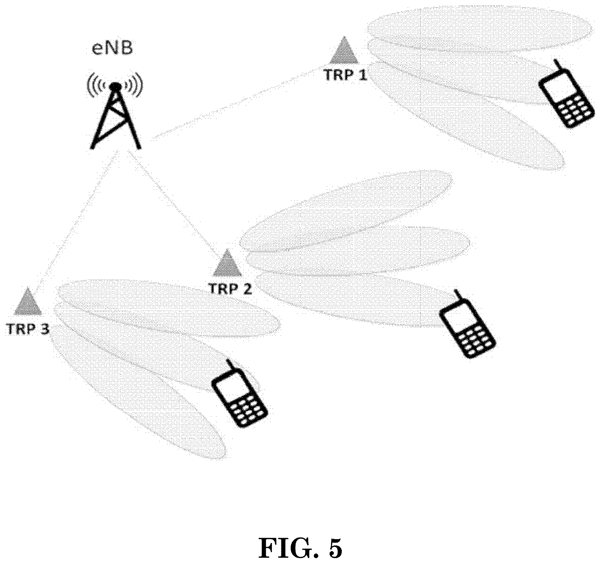

Based on 3GPP R2-162709 and as shown in FIG. 5, an evolved Node B (eNB) or a G Node B (gNB) may have multiple transmission/reception points (TRPs) that are either centralized or distributed. Each TRP can form multiple beams. The number of beams and the number of simultaneous beams in the time/frequency domain depend on the number of antenna array elements and the radiofrequency (RF) at the TRP.

Potential mobility types for New Radio (NR) are intra-TRP mobility, inter-TRP mobility, and inter-NR eNB mobility.

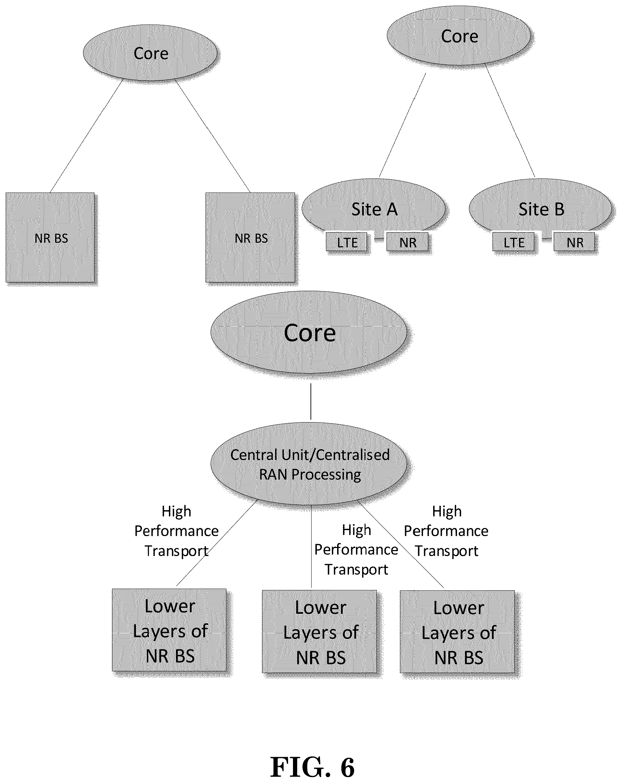

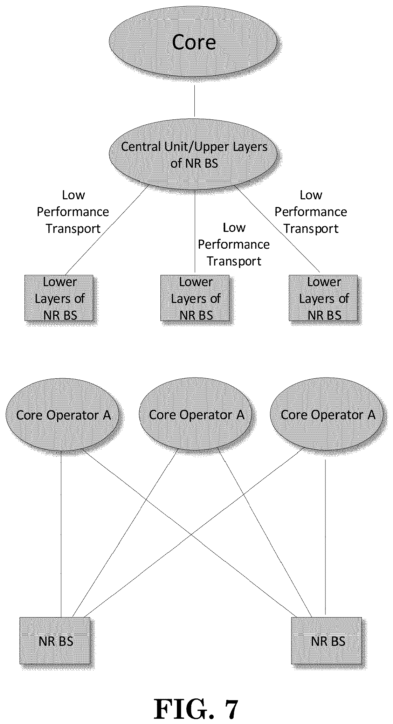

Based on 3GPP R3-160947, TR 38.801 V0.1.0, the scenarios illustrated in FIGS. 6-7 should be considered for support by the NR radio network architecture.

Based on 3GPP R2-164306, the following scenarios in terms of cell layout for standalone NR are captured to be studied: macro cell only deployment, heterogeneous deployment, and small cell only deployment.

Based on 3GPP RAN2#94 meeting minutes, one (1) NR eNB (e.g. called gNB) corresponds to one (1) or many TRPs. There are two levels of network controlled mobility: Radio Resource Control (RRC) driven at the "cell" level and zero/minimum RRC involvement (e.g., at Medium Access Control (MAC)/ Physical (PHY)).

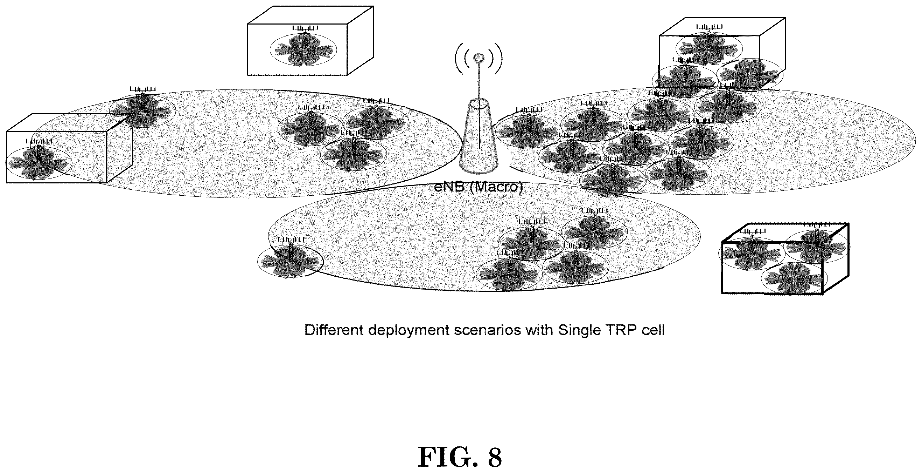

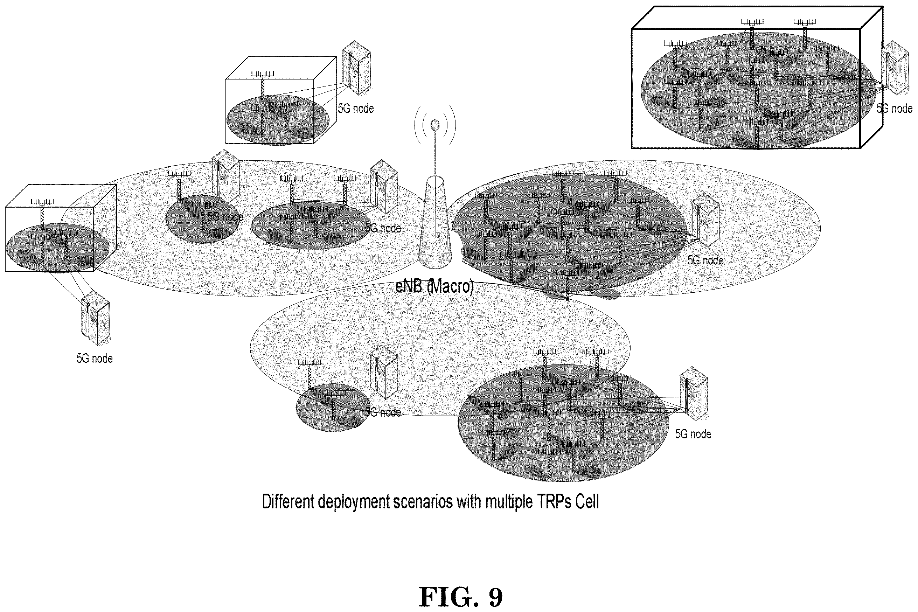

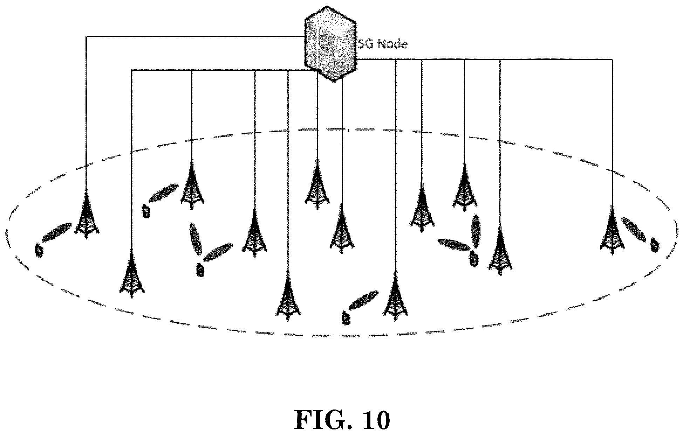

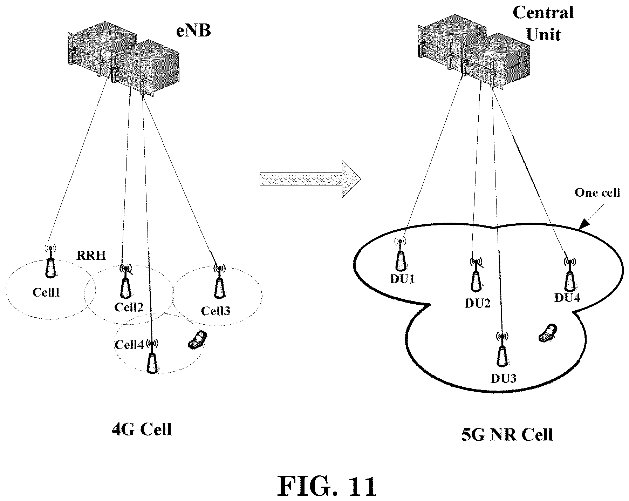

FIGS. 8-11 show some example of the concept of a cell in 5G NR. FIG. 8 shows a deployment with single TRP cell. FIG. 9 shows a deployment with multiple TRP cells. FIG. 10 shows one 5G cell comprising a 5G node with multiple TRPs. FIG. 11 shows a comparison between a LTE cell and a NR cell.

In another aspect, LTE random access procedure is specified in 3GPP TS 36.321 V14.1.0 and 3GPP TS 36.300 V14.1.0 as quoted below.

10.1.5 Random Access Procedure

The random access procedure is characterized by:

- Common procedure for FDD and TDD;
- One procedure irrespective of cell size and the number of serving cells when CA is configured;

The random access procedure is performed for the following events related to the PCell:

- Initial access from RRC_IDLE;

- RRC Connection Re-establishment procedure, except for NB-IoT UE that only uses Control Plane CIoT EPS optimizations, as defined in TS 24.301 [20];

- Handover, except for NB-IoT;

- DL data arrival during RRC_CONNECTED requiring random access procedure:

  - E.g. when UL synchronisation status is "non-synchronised".

- UL data arrival during RRC_CONNECTED requiring random access procedure:

  - E.g. when UL synchronisation status is "non-synchronised" or there are no PUCCH resources for SR available.

- For positioning purpose during RRC_CONNECTED requiring random access procedure:

  - E.g. when timing advance is needed for UE positioning.

The random access procedure is also performed on a SCell to establish time alignment for the corresponding sTAG.

In DC, the random access procedure is also performed on at least PSCell upon SCG addition/modification, if instructed, or upon DL/UL data arrival during RRC_CONNECTED requiring random access procedure. The UE initiated random access procedure is performed only on PSCell for SCG.

Furthermore, the random access procedure takes two distinct forms:

- Contention based (applicable to all six events, but the sixth event for positioning is applicable for NB-IoT only);

- Non-contention based (applicable to only handover, DL data arrival, positioning and obtaining timing advance alignment for a sTAG), except for NB-IoT.

Normal DL/UL transmission can take place after the random access procedure.

An RN supports both contention-based and non-contention-based random access. When an RN performs the random access procedure, it suspends any current RN subframe configuration, meaning it temporarily disregards the RN subframe configuration. The RN subframe configuration is resumed at successful random access procedure completion.

For NB-IoT, the random access procedure is performed on the anchor carrier.

10.1.5.1 Contention based random access procedure

The contention based random access procedure is outlined on Figure 10.1.5.1-1 below:

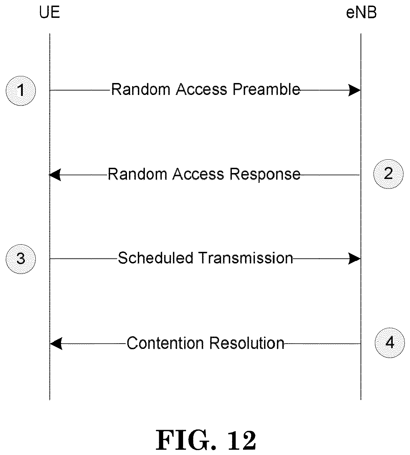

FIG. 12 (reproduction of Figure 10.1.5.1-1 taken from 3GPP TS 36.300 V14.1.0).

The four steps of the contention based random access procedures are:

1) Random Access Preamble on RACH in uplink:

- There are two possible groups defined and one is optional. If both groups are configured the size of message 3 and the pathloss are used to determine which group a preamble is selected from. The group to which a preamble belongs provides an indication of the size of the message 3 and the radio conditions at the UE. The preamble group information along with the necessary thresholds are broadcast on system information.

2) Random Access Response generated by MAC on DL-SCH:

- Semi-synchronous (within a flexible window of which the size is one or more TTI) with message 1;

- No HARQ;

- Addressed to RA-RNTI on PDCCH;

- Conveys at least RA-preamble identifier, Timing Alignment information for the pTAG, initial UL grant and assignment of Temporary C-RNTI (which may or may not be made permanent upon Contention Resolution);

- Intended for a variable number of UEs in one DL-SCH message.

3) First scheduled UL transmission on UL-SCH:

- Uses HARQ;

- Size of the transport blocks depends on the UL grant conveyed in step 2.

- For initial access:

  - Conveys the RRC Connection Request generated by the RRC layer and transmitted via CCCH;

  - Conveys at least NAS UE identifier but no NAS message;

  - RLC TM: no segmentation.

- For RRC Connection Re-establishment procedure:

  - Conveys the RRC Connection Re-establishment Request generated by the RRC layer and transmitted via CCCH;

  - RLC TM: no segmentation;

  - Does not contain any NAS message.

- After handover, in the target cell:

  - Conveys the ciphered and integrity protected RRC Handover Confirm generated by the RRC layer and transmitted via DCCH;

  - Conveys the C-RNTI of the UE (which was allocated via the Handover Command);

  - Includes an uplink Buffer Status Report when possible.

- For other events:

  - Conveys at least the C-RNTI of the UE;

- In the procedure to resume the RRC connection:

  - Conveys the RRC Connection Resume Request generated by the RRC layer and transmitted via CCCH;

  - Conveys a Resume ID to resume the RRC connection;

- For NB-IoT:

  - In the procedure to setup the RRC connection:

    - An indication of the amount of data for subsequent transmission(s) on SRB or DRB can be indicated.

4) Contention Resolution on DL:

- Early contention resolution shall be used i.e. eNB does not wait for NAS reply before resolving contention;

- Not synchronised with message 3;

- HARQ is supported;

- Addressed to:

  - The Temporary C-RNTI on PDCCH for initial access and after radio link failure;

  - The C-RNTI on PDCCH for UE in RRC_CONNECTED.

- HARQ feedback is transmitted only by the UE which detects its own UE identity, as provided in message 3, echoed in the Contention Resolution message;

- For initial access and RRC Connection Re-establishment procedure, no segmentation is used (RLC-TM).

The Temporary C-RNTI is promoted to C-RNTI for a UE which detects RA success and does not already have a C-RNTI; it is dropped by others. A UE which detects RA success and already has a C-RNTI, resumes using its C-RNTI.
When CA is configured, the first three steps of the contention based random access procedures occur on the PCell while contention resolution (step 4) can be cross-scheduled by the PCell.
When DC is configured, the first three steps of the contention based random access procedures occur on the PCell in MCG and PSCell in SCG. When CA is configured in SCG, the first three steps of the contention based random access procedures occur on the PSCell while contention resolution (step 4) can be cross-scheduled by the PSCell.

10.1.5.2 Non-contention based random access procedure

The non-contention based random access procedure is outlined on Figure 10.1.5.2-1 below:

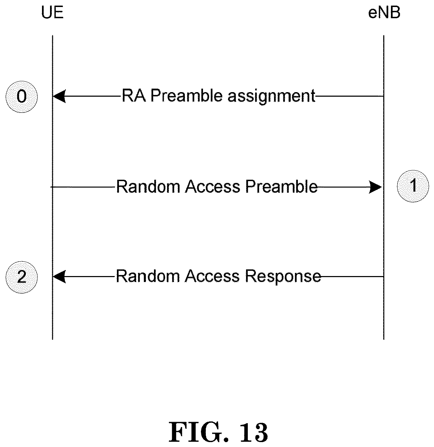

FIG. 13 (reproduction of Figure 10.1.5.2-1 taken from 3GPP TS 36.300 V14.1.0).
The three steps of the non-contention based random access procedures are:

0) Random Access Preamble assignment via dedicated signalling in DL:

- eNB assigns to UE a non-contention Random Access Preamble (a Random Access Preamble not within the set sent in broadcast signalling).

- Signalled via:

    - HO command generated by target eNB and sent via source eNB for handover;

    - PDCCH in case of DL data arrival or positioning;

    - PDCCH for initial UL time alignment for a sTAG.

1) Random Access Preamble on RACH in uplink:

- UE transmits the assigned non-contention Random Access Preamble.

2) Random Access Response on DL-SCH:

- Semi-synchronous (within a flexible window of which the size is two or more TTIs) with message 1;

- No HARQ;

- Addressed to RA-RNTI on PDCCH;

- Conveys at least:

    - Timing Alignment information and initial UL grant for handover;

    - Timing Alignment information for DL data arrival;

    - RA-preamble identifier;

    - Intended for one or multiple UEs in one DL-SCH message.

When performing non-contention based random access on the PCell while CA is configured, the Random Access Preamble assignment via PDCCH of step 0, step 1 and 2 of the non-contention based random access procedure occur on the PCell. In order to establish timing advance for a sTAG, the eNB may initiate a non-contention based random access procedure with a PDCCH order (step 0) that is sent on a scheduling cell of activated SCell of the sTAG. Preamble transmission (step 1) is on the indicated SCell and Random Access Response (step 2) takes place on PCell.
When performing non-contention based random access on the PCell or PSCell while DC is configured, the Random Access Preamble assignment via PDCCH of step 0, step 1 and 2 of the non-contention based random access procedure occur on the corresponding cell. In order to establish timing advance for a sTAG, the eNB may initiate a non-contention based random access procedure with a PDCCH order (step 0) that is sent on a scheduling cell of activated SCell of the sTAG not including PSCell. Preamble transmission (step 1) is on the indicated SCell and Random Access Response (step 2) takes place on PCell for MCG and PSCell for SCG.

### 5.1.1 Random Access Procedure initialization

The Random Access procedure described in this subclause is initiated by a PDCCH order, by the MAC sublayer itself or by the RRC sublayer. Random Access procedure on an SCell shall only be initiated by a PDCCH order. If a MAC entity receives a PDCCH transmission consistent with a PDCCH order [5] masked with its C-RNTI, and for a specific Serving Cell, the MAC entity shall initiate a Random Access procedure on this Serving Cell. For Random Access on the SpCell a PDCCH order or RRC optionally indicate the ra-PreambleIndex and the ra-PRACH-MaskIndex, except for NB-IoT where the subcarrier index is indicated; and for Random Access on an SCell, the PDCCH order indicates the ra-PreambleIndex with a value different from 000000 and the ra-PRACH-MaskIndex. For the pTAG preamble transmission on PRACH and reception of a PDCCH order are only supported for SpCell. If the UE is an NB-IoT UE and is configured with a non-anchor carrier, perform the Random Access procedure on the anchor carrier.

Before the procedure can be initiated, the following information for related Serving Cell is assumed to be available for UEs other than NB-IoT UEs, BL UEs or UEs in enhanced coverage [8], unless explicitly stated otherwise:

- the available set of PRACH resources for the transmission of the Random Access Preamble, *prach-ConfigIndex.*

- the groups of Random Access Preambles and the set of available Random Access Preambles in each group (SpCell only):
  The preambles that are contained in Random Access Preambles group A and Random Access Preambles group B are calculated from the parameters *numberOfRA-Preambles* and *sizeOfRA-PreamblesGroupA:*
  If *sizeOfRA-PreamblesGroupA* is equal to *numberOfRA-Preambles* then there is no Random Access Preambles group B. The preambles in Random Access Preamble group A are the preambles 0 to *sizeOfRA-PreamblesGroupA* - 1 and, if it exists, the preambles in Random Access Preamble group B are the preambles *sizeOfRA-Preambles-GroupA* to *numberOfRA-Preambles* - 1 from the set of 64 preambles as defined in [7].

- if Random Access Preambles group B exists, the thresholds, *messagePowerOffsetGroupB* and *messageSize-GroupA,* the configured UE transmitted power of the Serving Cell performing the Random Access Procedure, $P_{CMAX, c}$ [10], and the offset between the preamble and Msg3, *deltaPreambleMsg3,* that are required for selecting one of the two groups of Random Access Preambles (SpCell only).

- the RA response window size *ra-ResponseWindowSize.*

- the power-ramping factor *powerRampingStep.*

- the maximum number of preamble transmission *preambleTransMax.*

- the initial preamble power *preambleInitialReceivedTargetPower.*

- the preamble format based offset DELTA_PREAMBLE (see subclause 7.6).

- the maximum number of Msg3 HARQ transmissions *maxHARQ-Msg3Tx* (SpCell only).

- the Contention Resolution Timer *mac-ContentionResolutionTimer* (SpCell only).

NOTE: The above parameters may be updated from upper layers before each Random Access procedure is initiated.

The following information for related Serving Cell is assumed to be available before the procedure can be initiated for NB-IoT UEs, BL UEs or UEs in enhanced coverage [8]:

- if the UE is a BL UE or a UE in enhanced coverage:

  - the available set of PRACH resources associated with each enhanced coverage level supported in the Serving Cell for the transmission of the Random Access Preamble, *prach-ConfigIndex.*

  - the groups of Random Access Preambles and the set of available Random Access Preambles in each group(SpCell only):
    The preambles that are contained in Random Access Preamble groups for each enhanced coverage level, if it exists, are the preambles *firstPreamble* to *lastPreamble.*

If *sizeOfRA-PreamblesGroupA* is not equal to *numberOfRA-Preambles,* Random Access Preambles group B exists for all enhanced coverage levels and is calculated as above.

NOTE: If Random Access Preamble group B exists, the eNB should ensure that at least one Random Access Preamble is contained in Random Access Preamble group A and Random Access Preamble group B for all enhanced coverage level.

- if the UE is a NB-IoT UE:

  - the available set of PRACH resources supported in the Serving Cell, *nprach-ParametersList.*

  - for random access resource selection and preamble transmission:

    - a PRACH resource is mapped into an enhanced coverage level.

    - each PRACH resource contains a set of *nprach-NumSubcarriers* subcarriers which can be partitioned into one or two groups for single/multi-tone Msg3 transmission by *nprach-SubcarrierMSG3-RangeStart.* Each group is referred to as a Random Access Preamble group below in the procedure text.

      - a subcarrier is identified by the subcarrier index in the range: [*nprach-SubcarrierOffset, nprach-SubcarrierOffset + nprach-NumSubcarriers*-1]

      - each subcarrier of a Random Access Preamble group corresponds to a Random Access Preamble.

    - when the subcarrier index is explicitly sent from the eNB as part of a PDCCH order *ra-PreambleIndex* shall be set to the signalled subcarrier index.

  - the mapping of the PRACH resources into enhanced coverage levels is determined according to the following:

    - the number of enhanced coverage levels is equal to one plus the number of RSRP thresholds present in *RSRP-ThresholdsPrachInfoList.*

    - each enhanced coverage level has one PRACH resource present in *nprach-ParametersList.*

    - enhanced coverage levels are numbered from 0 and the mapping of PRACH resources to enhanced coverage levels are done in increasing *numRepetitionsPerPreambleAttempt* order.

- the criteria to select PRACH resources based on RSRP measurement per enhanced coverage level supported in the Serving Cell *rsrp-ThresholdsPrachInfoList.*

- the maximum number of preamble transmission attempts per enhanced coverage level supported in the Serving Cell *maxNumPreambleAttemptCE.*

- the number of repetitions required for preamble transmission per attempt for each enhanced coverage level supported in the Serving Cell *numRepetitionPerPreambleAttempt.*

- the configured UE transmitted power of the Serving Cell performing the Random Access Procedure, $P_{CMAX, c}$ [10].

- the RA response window size *ra-ResponseWindowSize* and the Contention Resolution Timer *mac-ContentionResolutionTimer* (SpCell only) per enhanced coverage level supported in the Serving Cell.

- the power-ramping factor *powerRampingStep.*

- the maximum number of preamble transmission *preambleTransMax-CE.*

- the initial preamble power *preambleInitialReceivedTargetPower.*

- the preamble format based offset DELTA_PREAMBLE (see subclause 7.6). For NB-IoT the DELTA_PREAMBLE is set to 0.

The Random Access procedure shall be performed as follows:

- Flush the Msg3 buffer;

- set the PREAMBLE_TRANSMISSION_COUNTER to 1;

- if the UE is an NB-IoT UE, a BL UE or a UE in enhanced coverage:

  - set the PREAMBLE_TRANSMISSION_COUNTER_CE to 1;

  - if the starting enhanced coverage level, or for NB-IoT the initial number of PRACH repetitions, has been indicated in the PDCCH order which initiated the Random Access procedure, or if the starting enhanced coverage level has been provided by upper layers:

    - the MAC entity considers itself to be in that enhanced coverage level regardless of the measured RSRP;

  - else:

    - if the RSRP threshold of enhanced coverage level 3 is configured by upper layers in *rsrp-ThresholdsPrachInfoList* and the measured RSRP is less than the RSRP threshold of enhanced coverage level 3 and the UE is capable of enhanced coverage level 3 then:

      - the MAC entity considers to be in enhanced coverage level 3;

    - else if the RSRP threshold of enhanced coverage level 2 configured by upper layers in *rsrp-ThresholdsPrachInfoList* and the measured RSRP is less than the RSRP threshold of enhanced coverage level 2 and the UE is capable of enhanced coverage level 2 then:

      - the MAC entity considers to be in enhanced coverage level 2;

    - else if the measured RSRP is less than the RSRP threshold of enhanced coverage level 1 as configured by upper layers in *rsrp-ThresholdsPrachInfoList* then:

      - the MAC entity considers to be in enhanced coverage level 1;

    - else:

      - the MAC entity considers to be in enhanced coverage level 0;

- set the backoff parameter value to 0 ms;

- for the RN, suspend any RN subframe configuration;

- proceed to the selection of the Random Access Resource (see subclause 5.1.2). NOTE: There is only one Random Access procedure ongoing at any point in time in a MAC entity. If the MAC entity receives a request for a new Random Access procedure while another is already ongoing in the MAC entity, it is up to UE implementation whether to continue with the ongoing procedure or start with the new procedure.

5.1.2 Random Access Resource selection

The Random Access Resource selection procedure shall be performed as follows:

- If, except for NB-IoT, *ra-PreambleIndex* (Random Access Preamble) and *ra-PRACH-MaskIndex* (PRACH Mask Index) have been explicitly signalled and *ra-PreambleIndex* is not 000000:

  - the Random Access Preamble and the PRACH Mask Index are those explicitly signalled;

- else, for NB-IoT, if *ra-PreambleIndex* (Random Access Preamble) and PRACH resource have been explicitly signalled:

  - the PRACH resource is that explicitly signalled;

  - if the *ra-PreambleIndex* signalled is not 000000:

    - the Random Access Preamble is set to *nprach-SubcarrierOffset* + (*ra-PreambleIndex* modulo *nprach-NumSubcarriers*), where *nprach-SubcarrierOffset* and *nprach-NumSubcarriers* are parameters in the currently used PRACH resource.

  - else:

    - select the Random Access Preamble group according to the PRACH resource and the support for multi-tone Msg3 transmission.

    - randomly select a Random Access Preamble within the selected group.

- else the Random Access Preamble shall be selected by the MAC entity as follows:

  - If Msg3 has not yet been transmitted, the MAC entity shall, for NB-IoT UEs, BL UEs or UEs in enhanced coverage:

    - expect for NB-IoT, select the Random Access Preambles group and the PRACH resource corresponding to the selected enhanced coverage level;

    - for NB-IoT, select the PRACH resource corresponding to the selected enhanced coverage level, and select the Random Access Preambles group corresponding to the PRACH resource and the support for multi-tone Msg3 transmission;

  - If Msg3 has not yet been transmitted, the MAC entity shall, except for BL UEs or UEs in enhanced coverage in case preamble group B does not exists, or for NB-IoT UEs:

    - if Random Access Preambles group B exists and any of the following events occur:

      - the potential message size (UL data available for transmission plus MAC header and, where required, MAC control elements) is greater than *messageSizeGroupA* and the pathloss is less than $P_{CMAX,c}$ (of the Serving Cell performing the Random Access Procedure) - *preambleInitialReceivedTargetPower* - *deltaPreambleMsg3* - *messagePowerOffsetGroupB*;

      - the Random Access procedure was initiated for the CCCH logical channel and the CCCH SDU size plus MAC header is greater than *messageSizeGroupA*;

      - select the Random Access Preambles group B;
      - else:

        - select the Random Access Preambles group A.

  - else, if Msg3 is being retransmitted, the MAC entity shall:

    - select the same group of Random Access Preambles as was used for the preamble transmission attempt corresponding to the first transmission of Msg3.

  - randomly select a Random Access Preamble within the selected group. The random function shall be such that each of the allowed selections can be chosen with equal probability;

  - except for NB-IoT, set PRACH Mask Index to 0.

- determine the next available subframe containing PRACH permitted by the restrictions given by the *prach-Config-*

*Index* (except for NB-IoT), the PRACH Mask Index (except for NB-IoT, see subclause 7.3), physical layer timing requirements [2] and in case of NB-IoT, the subframes occupied by PRACH resources related to a higher enhanced coverage level (a MAC entity may take into account the possible occurrence of measurement gaps when determining the next available PRACH subframe);

- if the transmission mode is TDD and the PRACH Mask Index is equal to zero:

    - if *ra-PreambleIndex* was explicitly signalled and it was not 000000 (i.e., not selected by MAC):

        - randomly select, with equal probability, one PRACH from the PRACHs available in the determined subframe.

    - else:

        - randomly select, with equal probability, one PRACH from the PRACHs available in the determined subframe and the next two consecutive subframes.

- else:

    - determine a PRACH within the determined subframe in accordance with the requirements of the PRACH Mask Index, if any.

- for NB-IoT UEs, BL UEs or UEs in enhanced coverage, select the *raResponseWindowSize* and *mac-ContentionResolutionTimer* corresponding to the selected enhanced coverage level and PRACH.

- proceed to the transmission of the Random Access Preamble (see subclause 5.1.3).

5.1.3 Random Access Preamble transmission

The random-access procedure shall be performed as follows:

- set PREAMBLE_RECEIVED_TARGET_POWER to *preambleInitialReceivedTargetPower* + DELTA_PREAMBLE + (PREAMBLE_TRANSMISSION_COUNTER- 1) * *powerRampingStep;*
- if the UE is a BL UE or a UE in enhanced coverage:

    - the PREAMBLE_RECEIVED_TARGET_POWER is set to: PREAMBLE_RECEIVED_TARGET_POWER - 10 * log10(*numRepetitionPerPreambleAttempt*);

- ifNB-IoT:

    - for enhanced coverage level 0, the PREAMBLE_RECEIVED_TARGET_POWER is set to: PREAMBLE_RECEIVED_TARGET_POWER - 10 * log10(*numRepetitionPerPreambleAttempt*)

    - for other enhanced coverage levels, the PREAMBLE_RECEIVED_TARGET_POWER is set corresponding to the max UE output power;

- if the UE is an NB-IoT UE, a BL UE or a UE in enhanced coverage:

    - instruct the physical layer to transmit a preamble with the number of repetitions required for preamble transmission corresponding to the selected preamble group (i.e., *numRepetitionPerPreambleAttempt)* using the selected PRACH corresponding to the selected enhanced coverage level, corresponding RA-RNTI, preamble index or for NB-IoT subcarrier index, and PREAMBLE_RECEIVED_TARGET_POWER.

- else:

    - instruct the physical layer to transmit a preamble using the selected PRACH, corresponding RA-RNTI, preamble index and PREAMBLE_RECEIVED_TARGET_POWER.

5.1.4 Random Access Response reception

Once the Random Access Preamble is transmitted and regardless of the possible occurrence of a measurement gap or a Sidelink Discovery Gap for Transmission or a Sidelink Discovery Gap for Reception, the MAC entity shall monitor the PDCCH of the SpCell for Random Access Response(s) identified by the RA-RNTI defined below, in the RA Response window which starts at the subframe that contains the end of the preamble transmission [7] plus three subframes and has length ra-ResponseWindowSize. If the UE is a BL UE or a UE in enhanced coverage, RA Response window starts at the subframe that contains the end of the last preamble repetition plus three subframes and has length ra-ResponseWindowSize for the corresponding coverage level. If the UE is an NB-IoT UE, in case the number of NPRACH repetitions is greater than or equal to 64, RA Response window starts at the subframe that contains the end of the last preamble repetition plus 41 subframes and has length ra-ResponseWindowSize for the corresponding coverage level, and in case the number of NPRACH repetitions is less than 64, RA Response window starts at the subframe that contains the end of the last preamble repetition plus 4 subframes and has length ra-ResponseWindowSize for the corresponding coverage level. The RA-RNTI associated with the PRACH in which the Random Access Preamble is transmitted, is computed as:

$$RA\text{-}RNTI = 1 + t\_id + 10*f\_id$$

where t_id is the index of the first subframe of the specified PRACH ($0 \leq t\_id < 10$), and f_id is the index of the specified PRACH within that subframe, in ascending order of frequency domain ($0 \leq f\_id < 6$) except for NB-IoT UEs, BL UEs or UEs in enhanced coverage. If the PRACH resource is on a TDD carrier, the f_id is set to $f_{RA}$, where $f_{RA}$ is defined in Section 5.7.1 of [7]. For BL UEs and UEs in enhanced coverage, RA-RNTI associated with the PRACH in which the Random Access Preamble is transmitted, is computed as:

$$RA\text{-}RNTI = 1 + t\_id + 10*f\_id + 60*(SFN\_id \bmod (Wmax/10))$$

where t_id is the index of the first subframe of the specified PRACH ($0 \leq t\_id < 10$), f_id is the index of the specified PRACH within that subframe, in ascending order of frequency domain ($0 \leq f\_id < 6$), SFN_id is the index of the first radio frame of the specified PRACH, and Wmax is 400, maximum possible RAR window size in subframes for BL UEs or UEs in enhanced coverage. If the PRACH resource is on a TDD carrier, the f_id is set to $f_{RA}$, where $f_{RA}$ is defined in Section 5.7.1 of [7].

For NB-IoT UEs, the RA-RNTI associated with the PRACH in which the Random Access Preamble is transmitted, is computed as:

$$RA\text{-}RNTI = 1 + floor(SFN\_id/4)$$

where SFN_id is the index of the first radio frame of the specified PRACH.

The MAC entity may stop monitoring for Random Access Response(s) after successful reception of a Random Access Response containing Random Access Preamble identifiers that matches the transmitted Random Access Preamble.

- If a downlink assignment for this TTI has been received on the PDCCH for the RA-RNTI and the received TB is successfully decoded, the MAC entity shall regardless of the possible occurrence of a measurement gap or a Sidelink Discovery Gap for Transmission or a Sidelink Discovery Gap for Reception:

  - if the Random Access Response contains a Backoff Indicator subheader:

    - set the backoff parameter value as indicated by the BI field of the Backoff Indicator subheader and Table 7.2-1, except for NB-IoT where the value from Table 7.2-2 is used.

  - else, set the backoff parameter value to 0 ms.

  - if the Random Access Response contains a Random Access Preamble identifier corresponding to the transmitted Random Access Preamble (see subclause 5.1.3), the MAC entity shall:

- consider this Random Access Response reception successful and apply the following actions for the serving cell where the Random Access Preamble was transmitted:

    - process the received Timing Advance Command (see subclause 5.2);

    - indicate the *preambleInitialReceivedTargetPower* and the amount of power ramping applied to the latest preamble transmission to lower layers (i.e., (PREAMBLE_TRANSMISSION_COUNTER - 1) * *powerRampingStep*);

    - process the received UL grant value and indicate it to the lower layers;

- if *ra-PreambleIndex* was explicitly signalled and it was not 000000 (i.e., not selected by MAC):

    - consider the Random Access procedure successfully completed.

- else, if the Random Access Preamble was selected by the MAC entity:

    - set the Temporary C-RNTI to the value received in the Random Access Response message no later than at the time of the first transmission corresponding to the UL grant provided in the Random Access Response message;

    - if this is the first successfully received Random Access Response within this Random Access procedure:

        - if the transmission is not being made for the CCCH logical channel, indicate to the Multiplexing and assembly entity to include a C-RNTI MAC control element in the subsequent uplink transmission;

        - obtain the MAC PDU to transmit from the "Multiplexing and assembly" entity and store it in the Msg3 buffer.

NOTE: When an uplink transmission is required, e.g., for contention resolution, the eNB should not provide a grant smaller than 56 bits (or 88 bits for NB-IoT) in the Random Access Response.
NOTE: If within a Random Access procedure, an uplink grant provided in the Random Access Response for the same group of Random Access Preambles has a different size than the first uplink grant allocated during that Random Access procedure, the UE behavior is not defined.
If no Random Access Response is received within the RA Response window, or if none of all received Random Access Responses contains a Random Access Preamble identifier corresponding to the transmitted Random Access Preamble, the Random Access Response reception is considered not successful and the MAC entity shall:

- if the notification of power ramping suspension has not been received from lower layers:

    - increment PREAMBLE_TRANSMISSION_COUNTER by 1;

- if the UE is an NB-IoT UE, a BL UE or a UE in enhanced coverage:

    - if PREAMBLE_TRANSMISSION_COUNTER = *preambleTransMax-CE* + 1:

        - if the Random Access Preamble is transmitted on the SpCell:

            - indicate a Random Access problem to upper layers;
        - ifNB-IoT:

            - consider the Random Access procedure unsuccessfully completed;

- else:

    - if PREAMBLE_TRANSMISSION_COUNTER = *preambleTransMax* + 1:

        - if the Random Access Preamble is transmitted on the SpCell:

- indicate a Random Access problem to upper layers;

- if the Random Access Preamble is transmitted on an SCell:

  - consider the Random Access procedure unsuccessfully completed.

- if in this Random Access procedure, the Random Access Preamble was selected by MAC:

  - based on the backoff parameter, select a random backoff time according to a uniform distribution between 0 and the Backoff Parameter Value;

  - delay the subsequent Random Access transmission by the backoff time;

- if the UE is an NB-IoT UE, a BL UE or a UE in enhanced coverage:

  - increment PREAMBLE_TRANSMISSION_COUNTER_CE by 1;

  - if PREAMBLE_TRANSMISSION_COUNTER_CE = *maxNumPreambleAttemptCE* for the corresponding enhanced coverage level + 1:

    - reset PREAMBLE_TRANSMISSION_COUNTER_CE;

    - consider to be in the next enhanced coverage level, if it is supported by the Serving Cell and the UE, otherwise stay in the current enhanced coverage level;

    - select the Random Access Preambles group, *ra-ResponseWindowSize, mac-ContentionResolutionTimer,* and PRACH resource corresponding to the selected enhanced coverage level;

    - if the UE is an NB-IoT UE:

      - if the Random Access Procedure was initiated by a PDCCH order:

- consider the PRACH resource corresponding to the selected enhanced coverage level as explicitly signalled;

- proceed to the selection of a Random Access Resource (see subclause 5.1.2).

5.1.5 Contention Resolution

Contention Resolution is based on either C-RNTI on PDCCH of the SpCell or UE Contention Resolution Identity on DL-SCH. If the UE is an NB-IoT UE, a BL UE or a UE in enhanced coverage, the MAC entity shall use the mac-ContentionResolutionTimer for the corresponding enhanced coverage level if it exists.
Once Msg3 is transmitted, the MAC entity shall:

- start *mac-ContentionResolutionTimer* and restart *mac-ContentionResolutionTimer* at each HARQ retransmission;

- regardless of the possible occurrence of a measurement gap or Sidelink Discovery Gap for Reception, monitor the PDCCH until *mac-ContentionResolutionTimer* expires or is stopped;

- if notification of a reception of a PDCCH transmission is received from lower layers, the MAC entity shall:

  - if the C-RNTI MAC control element was included in Msg3:

    - if the Random Access procedure was initiated by the MAC sublayer itself or by the RRC sublayer and the PDCCH transmission is addressed to the C-RNTI and contains an UL grant for a new transmission; or

    - if the Random Access procedure was initiated by a PDCCH order and the PDCCH transmission is addressed to the C-RNTI:

- consider this Contention Resolution successful;

- stop *mac-ContentionResolutionTimer,*

- discard the Temporary C-RNTI;

- if the UE is an NB-IoT UE and is configured with a non-anchor carrier:

  - the UL grant or DL assignment contained in the PDCCH transmission on the anchor carrier is valid only for the non-anchor carrier.

- consider this Random Access procedure successfully completed.

- else if the CCCH SDU was included in Msg3 and the PDCCH transmission is addressed to its Temporary C-RNTI:

  - if the MAC PDU is successfully decoded:

    - stop *mac-ContentionResolutionTimer*;

    - if the MAC PDU contains a UE Contention Resolution Identity MAC control element; and

    - if the UE Contention Resolution Identity included in the MAC control element matches the 48 first bits of the CCCH SDU transmitted in Msg3:

      - consider this Contention Resolution successful and finish the disassembly and demultiplexing of the MAC PDU;

      - set the C-RNTI to the value of the Temporary C-RNTI;

      - discard the Temporary C-RNTI;

      - consider this Random Access procedure successfully completed.

  - else

    - discard the Temporary C-RNTI;

    - consider this Contention Resolution not successful and discard the successfully decoded MAC PDU.

- if *mac-ContentionResolutionTimer* expires:

  - discard the Temporary C-RNTI;

  - consider the Contention Resolution not successful.

- if the Contention Resolution is considered not successful the MAC entity shall:

  - flush the HARQ buffer used for transmission of the MAC PDU in the Msg3 buffer;

  - if the notification of power ramping suspension has not been received from lower layers:

    - increment PREAMBLE_TRANSMISSION_COUNTER by 1;

  - if the UE is an NB-IoT UE, a BL UE or a UE in enhanced coverage:

    - if PREAMBLE_TRANSMISSION_COUNTER = *preambleTransMax-CE* + 1:

      - indicate a Random Access problem to upper layers.

- ifNB-IoT:

    - consider the Random Access procedure unsuccessfully completed;

- else:

    - if PREAMBLE_TRANSMISSION_COUNTER = *preambleTransMax* + 1:

        - indicate a Random Access problem to upper layers.

- based on the backoff parameter, select a random backoff time according to a uniform distribution between 0 and the Backoff Parameter Value;

- delay the subsequent Random Access transmission by the backoff time;

- proceed to the selection of a Random Access Resource (see subclause 5.1.2).

5.1.6 Completion of the Random Access procedure

At completion of the Random Access procedure, the MAC entity shall:

- discard explicitly signalled ra-PreambleIndex and ra-PRACH-MaskIndex, if any;

- flush the HARQ buffer used for transmission of the MAC PDU in the Msg3 buffer.

In addition, the RN shall resume the suspended RN subframe configuration, if any.

6.1.5 MAC PDU (Random Access Response)

A MAC PDU consists of a MAC header and zero or more MAC Random Access Responses (MAC RAR) and optionally padding as described in figure 6.1.5-4.
The MAC header is of variable size.
A MAC PDU header consists of one or more MAC PDU subheaders; each subheader corresponding to a MAC RAR except for the Backoff Indicator subheader. If included, the Backoff Indicator subheader is only included once and is the first subheader included within the MAC PDU header.
A MAC PDU subheader consists of the three header fields E/T/RAPID (as described in figure 6.1.5-1) but for the Backoff Indicator subheader which consists of the five header field E/T/R/R/BI (as described in figure 6.1.5-2).
A MAC RAR consists of the four fields R/Timing Advance Command/UL Grant/Temporary C-RNTI (as described in figures 6.1.5-3 and 6.1.5-3a). For BL UEs and UEs in enhanced coverage in enhanced coverage level 2 or 3 (see subclause 6.2 in [2]) the MAC RAR in figure 6.1.5-3a is used, otherwise the MAC RAR in figure 6.1.5-3 is used.
Padding may occur after the last MAC RAR. Presence and length of padding is implicit based on TB size, size of MAC header and number of RARs.

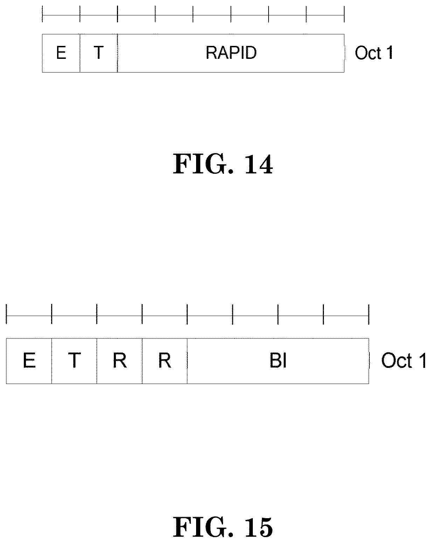

(FIG. 14 is a reproduction of Figure 6.1.5-1 taken from 3GPP TS 36.321 V14.1.0).
(FIG. 15 is a reproduction of Figure 6.1.5-2 taken from 3GPP TS 36.321 V14.1.0).

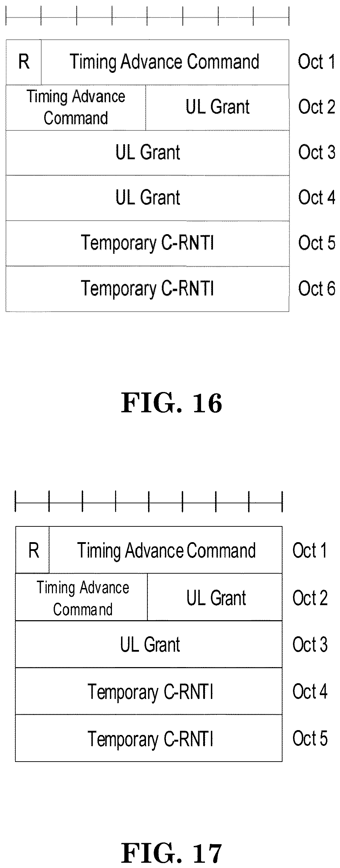

(FIG. 16 is a reproduction of Figure 6.1.5-3 taken from 3GPP TS 36.321 V14.1.0).
(FIG. 17 is a reproduction of Figure 6.1.5-3a taken from 3GPP TS 36.321 V14.1.0).

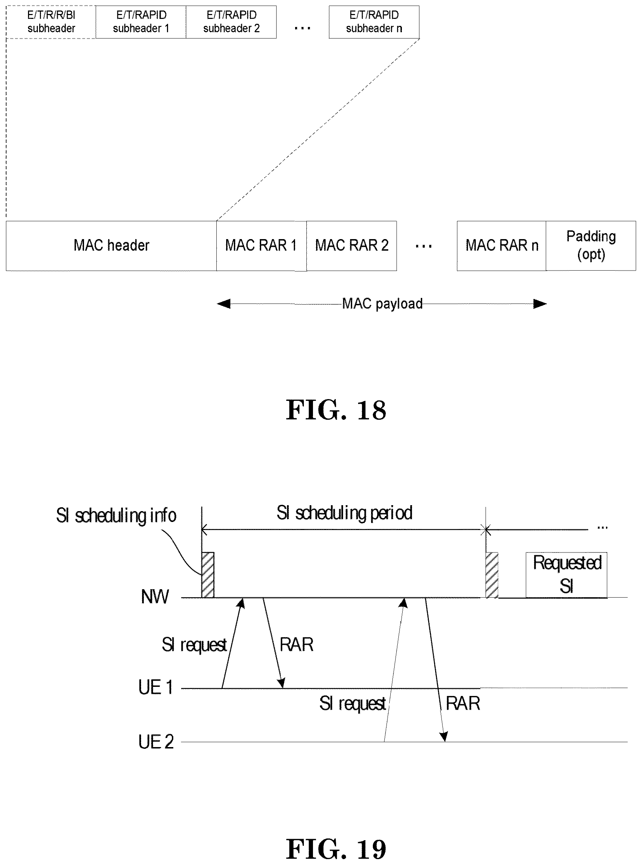

(FIG. 18 is a reproduction of Figure 6.1.5-4 taken from 3GPP TS 36.321 V14.1.0).

6.2.2 MAC header for Random Access Response

The MAC header is of variable size and consists of the following fields:

- E: The Extension field is a flag indicating if more fields are present in the MAC header or not. The E field is set to "1" to indicate at least another set of E/T/RAPID fields follows. The E field is set to "0" to indicate that a MAC RAR or padding starts at the next byte;

- T: The Type field is a flag indicating whether the MAC subheader contains a Random Access ID or a Backoff Indicator. The T field is set to "0" to indicate the presence of a Backoff Indicator field in the subheader (BI). The T field is set to "1" to indicate the presence of a Random Access Preamble ID field in the subheader (RAPID);

- R: Reserved bit, set to "0";

- BI: The Backoff Indicator field identifies the overload condition in the cell. The size of the BI field is 4 bits;

- RAPID: The Random Access Preamble IDentifier field identifies the transmitted Random Access Preamble (see subclause 5.1.3). The size of the RAPID field is 6 bits.

The MAC header and subheaders are octet aligned.
NOTE: For NB-IoT, the Random Access Preamble IDentifier field corresponds to the start subcarrier index.

6.2.3 MAC payload for Random Access Response

The MAC RAR is of fixed size and consists of the following fields:

- R: Reserved bit, set to "0";

- Timing Advance Command: The Timing Advance Command field indicates the index value $T_A$ (0, 1, 2... 1282) used to control the amount of timing adjustment that the MAC entity has to apply (see subclause 4.2.3 of [2]). The size of the Timing Advance Command field is 11 bits;

- UL Grant: The Uplink Grant field indicates the resources to be used on the uplink (see subclause 6.2 of [2]). The size of the UL Grant field is 20 bits, except for BL UEs and UEs in enhanced coverage in enhanced coverage level 2 or 3, where the size of the UL grant field is 12 bits.

- Temporary C-RNTI: The Temporary C-RNTI field indicates the temporary identity that is used by the MAC entity during Random Access. The size of the Temporary C-RNTI field is 16 bits.

The MAC RAR is octet aligned.
The following terminology may be used hereafter in the detailed description:

• BS: a network central unit or a network node in NR which is used to control one or multiple TRPs which are associated with one or multiple cells. Communication between BS and TRP(s) is via fronthaul. BS could also be referred to as central unit (CU), eNB, gNB, or NodeB.

• TRP: a transmission and reception point provides network coverage and directly communicates with UEs. TRP could also be referred to as distributed unit (DU) or network node.

• Cell: a cell is composed of one or multiple associated TRPs, i.e. coverage of the cell is composed of coverage of all associated TRP(s). One cell is controlled by one BS. A cell could also be referred to as a TRP group (TRPG).

• There are at least two UE states. The UE states may be RRC states. The states may include connected state, non-connected state, light-connected state, active state, inactive state, idle state, and/or RAN controlled state. A UE state (or RRC state) may also be called a UE mode (or RRC mode).

In LTE RRC, idle mode and connected mode are two defined UE states. A UE is in idle mode when it does not establish a RRC connection. There are limited UE activities in idle mode, e.g., receiving system information, monitoring paging, and performing measurement for UE mobility; thus, the idle mode can be considered power efficient. If a UE has some data to transmit, it needs to establish a RRC connection, and it enters a connected mode to transmit data. The network can also page the UE to establish a RRC connection, e.g. when there is mobile terminating traffic. In LTE, three procedures are required to enable a UE in idle mode to transmit data: a procedure to establish RRC connection, a procedure to activate security, and a procedure to setup data radio bearer.
In order to reduce latency and signaling overhead required for a UE from a power efficient state (e.g., idle mode) to being able to perform data transmission (e.g., connected mode), improvement is considered in NR by introducing a new state. The new state may be a new RRC state or a substate in one of the current RRC states (e.g., idle mode, or connected mode). It may also be possible that the new state will replace the idle mode. In the following, the new state is called inactive state (or RRC_Inactive).

In 3GPP TR 38.804 v0.8.0, 3GPP RAN2 considerations on the inactive state (or RAN controlled state) are captured as quoted below:

- Study the introduction of a RAN controlled "state" characterised by, at least:

  a) Able to start data transfer with low delay (as required by RAN requirements).

- Potential characteristics of the RAN controlled "state" for study:

  a) No dedicated resources.

- RAN2 will study the possibility for the UE to perform data transmission without state transition from the 'new state' to be fully connected. It is FFS whether data transfer is by leaving the "state" or data transfer can occur within the "state".

- RAN2 assumes that UE performs CN level location update when crossing a TA boundary when in inactive (in addition to RAN updates based on RAN areas).

- There will be NG Core/CN Location Area code (similar to Tracking Area code) broadcast in system information of an NR Cell.

In LTE, system information is broadcasted periodically and occupies system resources. For some system information (e.g., information used for accessing a cell), broadcasting the information is necessary since it is needed by a UE before the network can communicate with the UE via a dedicated signaling. However, for some other system information (e.g., MBMS related information, or WLAN-interworking related information), it may not be efficient to always broadcast the information periodically since there may be the possibility that there are not many UEs using the related service.

In NR, it is considered not as efficient to provide all system information by periodic broadcast since it consumes too much radio resources. In order to reduce the signaling overhead caused by system information (SI), it was agreed to classify system information into "Minimum SI" and 'Other SI' in NR. Minimum SI needs to be broadcasted periodically, and Other SI comprises everything not broadcasted in minimum SI. Agreements with respect to system information provisioning are captured in 3GPP TR 38.804 v0.8.0 as quoted below:

- The minimum SI includes at least SFN, list of PLMN, Cell ID, cell camping parameters, RACH parameters.

  - A unique global cell ID is broadcast for an NR cell.

- If network allows on demand mechanism, parameters required for requesting other SI-block(s) (if any needed, e.g. RACH preambles for request) shall be included in minimum SI.

- Cell-reselection neighbouring cell information is considered as other SI.

- PWS information can be classified into the other SI.

- The scheduling information for the other SI includes SIB type, validity information, SI periodicity and SI-window information and is provided irrespective of whether the other SI is periodically broadcast or not.

- For other SI, UE can request one or more SI-block(s) or all SI-blocks in a single request.

- For the other SI required by the UE, before the UE sends the other SI request the UE needs to know whether it is available in the cell and whether it is broadcast or not. This can be done by checking the minimum SI which provides the scheduling information for the other SI including SIB type, validity information, SI periodicity and SI-window information based on LTE.

- The scheduling information in minimum SI includes an indicator whether the concerned SI-block is periodically broadcasted or provided on demand. If minimum SI indicates that a SIB is not broadcasted, then UE does not assume that this SIB is a periodically broadcasted in its SI-window at every SI periodicity. Therefore the UE may send an SI request to receive this SIB.

- After sending the SI request, for receiving the requested SIB, UE monitors the SI window of the requested SIB in one or more SI periodicities of that SIB.

- Broadcasting some kind of index/identifier in minimum SI to enable the UE to avoid reacquisition of already stored SI-block(s)/SI message(s). The index/identifier and associated system information can be applicable in more than one cell. System information valid in one cell may be valid also in other cells.

- It is FFS what the index/identifier is, e.g. single index or area plus value tag, etc.

System information is divided into Minimum SI and Other SI. Minimum SI is periodically broadcast. The Minimum SI comprises basic information required for initial access to a cell and information for acquiring any Other SI broadcast periodically or provisioned via an on-demand basis, i.e., scheduling information. The Other SI encompasses everything not broadcast in the Minimum SI.

The Other SI may be either broadcast or provisioned in a dedicated manner. The provision of the Other SI may be either triggered by the network or upon request from the UE. For the Other SI required by the UE, before the UE sends the Other SI request, the UE needs to know whether the Other SI is available in the cell and whether it is broadcast or not. The UE in RRC_IDLE or RRC_INACTIVE should be able to request the Other SI without requiring a state transition. For the UE in RRC CONNECTED, dedicated RRC signaling can be used for the request and delivery of the Other SI. The Other SI may be broadcast at configurable periodicity and for certain duration. It is a network decision whether the Other SI is broadcast or delivered through dedicated UE specific RRC signaling.

A UE (e.g., idle mode UE, or inactive UE) could request system information (e.g., other SI, on-demand SI) when needed and the system information is not broadcast. It is possible to use a random access preamble (i.e. Msg1 of a random access procedure) for SI request. If Msg1 is used for SI request, it is assumed that one or multiple specific preambles will be used (e.g. different preamble for different combination of SI). Whenever a UE would like to request SI, the UE transmits the corresponding preamble to network.

Typically, a conventional random access procedure is used to obtain uplink grant and/or timing advance, whereas the random access procedure for a SI request is used to inform the network the need of SI. Different operations from a conventional random access procedure or simplified operations may be beneficial to improve the design of the random access procedure for a SI request.

When a UE requires some system information (e.g., some service specific system information that may be required after the related service is initiated) and it has not acquired the system information which is valid (e.g., for the current cell, or for the time being), the UE may initiate a random access procedure for requesting system information if the system information can be requested on demand (e.g., Other SI in NR) and the system information is currently not broadcasted. One or more specific random access preambles may be used as a SI request to inform the network to provide the system information.

After receiving a SI request, the network may not be able to provide the requested SI until the next SI scheduling period. The network may schedule the requested SI and/or update the SI scheduling information in the next scheduling period or a later scheduling period. The SI scheduling period may depend on the periodicity of the SI scheduling information broadcasted in the system information.

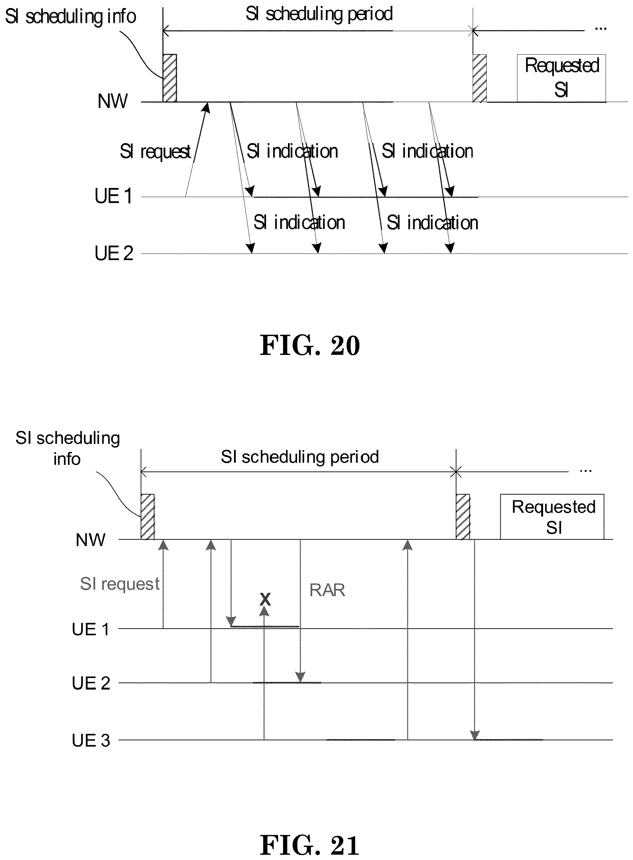

One drawback may be caused as illustrated in FIGS. 19 and 21. During the time period after the network receives the SI request from a first UE (e.g., UE1 in FIGS. 19 and 21) and before the requested SI being provided (or SI scheduling information being updated), a second UE (e.g., UE2 in FIGS. 19 and 21) that may also like to request the same SI may still transmit the preamble for a SI request because the UE does not know that the network has received the SI request. Besides, the additional Random Access Response (RAR) with the same content may be needed. Additionally, the retransmission of the preamble for the SI request would be required if the corresponding RAR is not received by a third UE (e.g., UE3 in FIG. 21).

Improvement of the SI request is considered in the following embodiments. In LTE, a UE monitors Physical Downlink Control Channel (PDCCH) for receiving a random access response. Scheduling information of the random access response is indicated on the PDCCH addressed to the Random Access Radio Network Temporary Identity (RA-RNTI). RA-RNTI is derived from the Physical Random Access Channel (PRACH) resource used for the preamble transmission. If more than one UE would like to request SI during the same time period, but they are using different PRACH resources to transmit the same preamble for the SI request, separate RAR (with the same content) are needed for different UEs since the UEs monitor different RA-RNTI, which is not resource efficient.

To solve this issue, according to one method, a single identity (e.g., RA-RNTI) could be used by the UEs requesting the same SI(s), for example, irrespective of the resource used for preamble transmission. One RAR addressed to the identity could be monitored and received by all UEs requesting SI during a period of time, e.g., if RAR monitoring window of these UEs is overlapped. For example, RA-RNTI could be derived from the preamble sequence used for the SI request. Alternatively, a fixed value could be used as the identity for RAR monitoring. Since the purpose of preamble transmission for the SI request is to inform the network about the need of the SI, it does not matter which preamble resource a UE uses to transmit the preamble.

Alternatively, rcsourcc(s), e.g. (PRACH) timc/frcqucncy rcsourccs, to bc used to transmit preamble(s) for SI request can be used to indicate which SI (set or group) is requested by the UE. The SI may be of a specific type, a specific set, a specific block, a specific group, etc. One preamble sequence for SI request may be sufficient. Mapping (or association) between resources for preamble transmission and requested SI (set or group) is preferably provided by network, e.g. via system information such as minimum SI. During a time period, e.g. SI scheduling period, resources used to request the same SI (set or group) may be limited, e.g. each SI (set or group) has one request opportunity. For example, a UE would select resource for preamble transmission based on which SI (set or group) is requested by the UE. And UEs requesting the same SI (set or group) may use the same preamble with the same set of time/frequency resources, e.g. within the same period. And the UEs monitor the same identity (e.g. RA-RNTI) that is derived from the time/frequency resources for RAR reception. In this way, network doesn't need to transmit separate RAR for different UEs. Network could know which SI (set or group) is requested based on where the preamble is received.

On the other hand, it is possible that more than one UE would like to transmit a SI request during a time period. The network is informed about the need of the SI as long as one UE delivers the SI request successfully. Since it does not matter which UE delivers the SI request successfully, a UE could stop transmitting the SI request if the UE knows that some other UE has successfully transmitted the SI request.

The network could provide an SI indication (in a random access response), for example, during the SI scheduling period where the preamble has been received. The SI indication may indicate that some SI will be provided (or broadcasted) in a short time, e.g., in the next SI scheduling period. The SI indication may indicate which SI is to be provided. Alternatively, the SI indication may indicate which preamble(s) for the SI request has been received, e.g, during the SI scheduling period. According to this method, the second UE that receives the SI indication does not need to transmit the associated preamble for the SI request, e.g. which is already received by the network from the first UE. If the UE needs the associated SI, the UE will attempt to acquire the associated SI during the next SI scheduling period.

In one method, the SI indication may be transmitted periodically. For example, the SI indication is transmitted during this SI scheduling period. In one method, the network may transmit the SI indication autonomously. For example, the SI indication is transmitted by the network not in response to the reception of the preamble for the SI request.

One example of the method is shown in FIG. 20. A first UE (e.g., UE1 in FIG. 20) that would like to request a SI transmits a SI request (e.g., a preamble reserved for SI request), and the SI request is successfully delivered to the network. After the network receives the SI request, the network transmits a SI indication, e.g. in a RAR, during the SI scheduling period. A second UE (e.g. UE2 in FIG. 20) would understand that the corresponding SI will be provided in the next SI scheduling period by receiving the SI indication without transmitting a SI request.

In another aspect, in LTE, a UE starts monitoring RA-RNTI on PDCCH for receiving a random access response 3ms after transmitting a random access preamble. The UE may stop the monitoring if a random access response corresponding to the random access preamble is received. The UE stops the monitoring after a period of time (i.e., the RA window as disclosed in 3GPP TS 36.321 V14.1.0) if no random access response corresponding to the random access preamble is received. To increase the opportunity of receiving a random access response, a UE could start monitoring RA-RNTI (or random access response) immediately after the transmission of a preamble for the SI request. Alternatively, the UE could monitor RAR even before transmitting the preamble for the SI request since the same preamble may be transmitted by another UE requesting SI. The UE could start monitoring RAR upon initiation of a random access procedure.

Similarly, it is not necessary for a UE to continue the RA procedure for a SI request if the network has already or has planned to provide the SI. Therefore, a UE could stop the ongoing RA procedure for the SI request (e.g., stop transmitting the preamble for the SI request, or stop monitoring RA-RNTI for RAR reception corresponding to the preamble for the SI request) or consider the ongoing RA procedure for the SI request is successfully completed if the UE detects that the requested SI is or will be broadcasted (e.g., the SI scheduling information includes the information of the requested SI).

In one method, one possible way to stop the ongoing RA procedure for the SI request is to reset the Medium Access Control (MAC). Alternatively, the UE could stop the ongoing RA procedure for the SI request or the UE may consider the RA procedure successfully completed if the UE detects a response (e.g., RAR) of the transmitted preamble for the RA procedure.

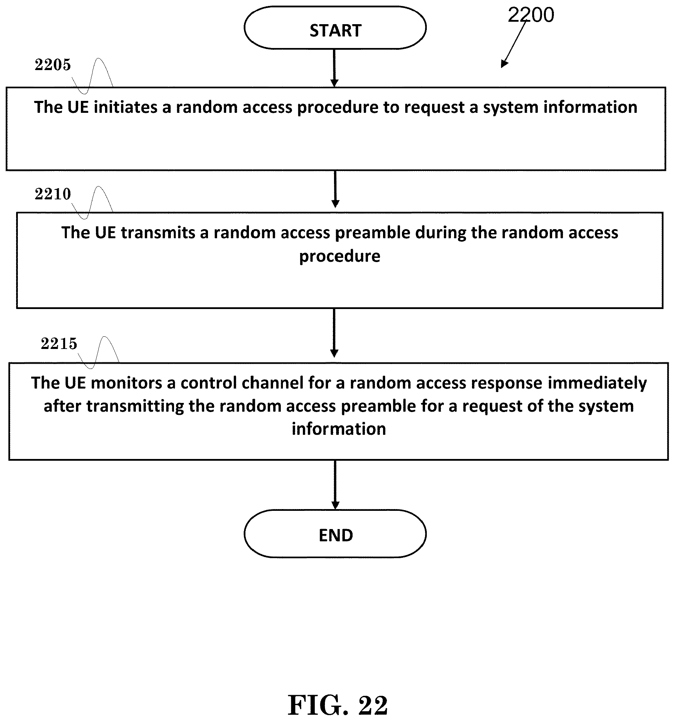

FIG. 22 is a flow chart 2200 according to one exemplary embodiment from the perspective of a UE. In step 2205, the UE initiates a random access procedure to request a system information. In step 2210, the UE transmits a random access preamble during the random access procedure. In step 2215, the UE monitors a control channel for a random access response immediately after transmitting the random access preamble for a request of the system information.

In one or more of the above-disclosed methods, preferably the monitoring of the control channel for a random access response occurs as soon as possible after transmitting the random access preamble.

In one or more of the above-disclosed methods, preferably the monitoring of the control channel for a random access response occurs from the earliest (and possible, available, allowable, suitable, applicable, or feasible) resource of the control channel after transmitting the random access preamble.

In one or more of the above-disclosed methods, preferably the UE receives the random access response before a round trip time or 3 milliseconds after the random access preamble is transmitted.

In one or more of the above-disclosed methods, preferably the method further comprises stopping the random access procedure in response to receiving the random access response.

In one or more of the above-disclosed methods, preferably the random access response corresponds to the random access preamble transmitted by the UE.

In one or more of the above-disclosed methods, preferably the method further comprises stopping the random access procedure if the UE detects, based on minimum system information, that the system information is or will be broadcasted.

In one or more of the above-disclosed methods, preferably the UE stops the random access procedure by resetting the Medium Access Control.

In one or more of the above-disclosed methods, preferably the control channel indicates a scheduling information of the random access response.

In one or more of the above-disclosed methods, preferably the control channel is a physical downlink control channel.

In one or more of the above-disclosed methods, preferably the UE monitors a random access radio network temporary identity for the random access response

According to another exemplary method, the UE uses a first radio resource to transmit a random access preamble for a system information request. The UE receives a random access response corresponding to the random access preamble, wherein the random access response is addressed to a specific identity derived independent of the first radio resource.

In one or more of the above-disclosed methods, preferably the specific identity is a RNTI, RA-RNTI.

In one or more of the above-disclosed methods, preferably the UE monitors the specific identity on a downlink control channel, e.g. PDCCH, for receiving the random access response.

In one or more of the above-disclosed methods, preferably the specific identity is a fixed value or derived from the random access preamble, e.g. a preamble signature.

In one or more of the above-disclosed methods, preferably the random access preamble or the preamble signature is used for a system information request (or dedicated to a system information request).

In one or more of the above-disclosed methods, preferably the first radio resource is used for a system information request.

In one or more of the above-disclosed methods, preferably more than one random access preambles are used for system information request.

In one or more of the above-disclosed methods, preferably the UE uses a second radio resource to transmit a second random access preamble, and the UE receives a second random access response corresponding to the second random access preamble, wherein the second random access response is addressed to a second identity derived at least based on the second radio resource. Preferably, the second random access preamble is not used for system information request.

In one or more of the above-disclosed methods, preferably the second radio resource is not used for system information request.

In one or more of the above-disclosed methods, preferably the UE transmits the second random access preamble not due to a system information request, e.g., due to an uplink data arrival.

In one or more of the above-disclosed methods, preferably the second identity is derived from time and frequency of the second radio resource.

In one or more of the above-disclosed methods, preferably the second identity is a RNTI, e.g. RA-RNTI.

According to another exemplary method, the UE uses a specific radio resource to transmit a random access preamble for system information request, wherein the specific radio resource is determined at least based on system information that the UE is to request.

In one or more of the above-disclosed methods, preferably the UE uses a first radio resource to transmit a random access preamble to request a first set of system information.

In one or more of the above-disclosed methods, preferably the UE uses a second radio resource to transmit a random access preamble to request a second set of system information.

In one or more of the above-disclosed methods, preferably an association between the radio resource and the set of system information is configured by the network.

According to another exemplary method, a network node provides an association of radio resources for a random access preamble transmission and a system information, wherein the radio resources indicates which set of system information is requested.

In one or more of the above-disclosed methods, preferably a first radio resource for the random access preamble transmission is associated with a first set of system information.

In one or more of the above-disclosed methods, preferably a second radio resource for random access preamble transmission is associated with a second set of system information.

In one or more of the above-disclosed methods, preferably the random access preamble or the preamble signature is used for a system information request (or dedicated to system information request).

In one or more of the above-disclosed methods, preferably the first radio resource is different from the second radio resource.

In one or more of the above-disclosed methods, preferably the first set of system information is different from the second set of system information.

In one or more of the above-disclosed methods, preferably the radio resources are differentiated by time and frequency

In one or more of the above-disclosed methods, preferably a single random access preamble or preamble signature is used for system information request.

In one or more of the above-disclosed methods, preferably the association is provided by the system information, e.g. minimum SI.

In one or more of the above-disclosed methods, preferably the first radio resource (or the second radio resource) occurs periodically.

In one or more of the above-disclosed methods, preferably the first radio resource (or the second radio resource) is available once in a system information scheduling period.

According to another exemplary method, a network node transmits an indication during a random access procedure, wherein the indication is related to the system information that can be requested on demand or a random access preamble for a system information request.

In one or more of the above-disclosed methods, preferably the network node receives the random access preamble for the system information request before transmitting the indication.

In one or more of the above-disclosed methods, preferably the network provides the system information after transmitting the indication.

In one or more of the above-disclosed methods, preferably the network provides the system information at the next system information scheduling period after transmitting the indication.

According to another exemplary method, the UE initiates a random access procedure to request system information. The UE receives an indication during the random access procedure, wherein the indication is related to the requested system information. The UE stops the random access procedure in response to receiving the indication.

In one or more of the above-disclosed methods, preferably the indication is included in a random access response.

In one or more of the above-disclosed methods, preferably the indication is received before the UE transmits a random access preamble for the system information request.

According to another exemplary method, the UE initiates a random access procedure to request a system information. The UE receives a random access response before transmitting a random access preamble during the random access procedure. The UE stops the random access procedure in response to receiving the random access response.

According to another exemplary method, the UE initiates a random access procedure to request a system information. The UE transmits a random access preamble during the random access procedure. The UE monitors a control channel for a random access response immediately after transmitting the random access preamble for requesting the system information.

In one or more of the above-disclosed methods, preferably the UE receives the random access response before a round trip time or 3 milliseconds after the random access preamble is transmitted.

In one or more of the above-disclosed methods, preferably the UE stops the random access procedure in response to receiving the random access response.

According to another exemplary method, the UE initiates a random access procedure to request a system information. The UE transmits a random access preamble. The UE receives a random access response before a round trip time after the random access preamble is transmitted. The UE stops the random access procedure in response to receiving the random access response.

In one or more of the above-disclosed methods, preferably the round trip time is a minimum time period that a signaling is transmitted to the network and a response of the signaling is received by the UE. For example, the round trip time is approximately 3 ms for LTE random access preamble transmission and random access response reception.

In one or more of the above-disclosed methods, preferably an indication is included in the random access response.

In one or more of the above-disclosed methods, preferably the indication indicates which set of system information is to be provided (or broadcasted) later, e.g. at next system information scheduling period.

In one or more of the above-disclosed methods, preferably the indication is transmitted periodically.

In one or more of the above-disclosed methods, preferably the indication is transmitted in a period of time, e.g. a system information scheduling period.

In one or more of the above-disclosed methods, preferably the UE initiates the random access procedure to request at least a set of system information that is not provided (or broadcasted) currently.

In one or more of the above-disclosed methods, preferably at least the set of system information is to be provided (or broadcasted) in a next system information scheduling period.

In one or more of the above-disclosed methods, preferably at least the set of system information is to be provided (or broadcasted) in a next system information scheduling period.

In one or more of the above-disclosed methods, preferably the indication indicates which set of system information is to be provided (or broadcasted).

In one or more of the above-disclosed methods, preferably the indication indicates which random access preamble(s) (preamble signature) for the system information request has been received.

In one or more of the above-disclosed methods, preferably the random access response is received before the UE has transmitted any random access preamble for the system information request during the random access procedure.

In one or more of the above-disclosed methods, preferably the UE starts monitoring a control channel for a random access response immediately after transmitting a random access preamble for the system information request.

In one or more of the above-disclosed methods, preferably monitoring the control channel immediately after transmitting the random access preamble means that the UE starts monitoring the control channel from the earliest (and possible, available, allowable, suitable, applicable, or feasible) resource of the control channel after transmitting the random access preamble.

In one or more of the above-disclosed methods, preferably monitoring the control channel immediately after transmitting the random access preamble means that the UE starts monitoring the control channel from the next (possible, available, allowable, suitable, applicable, or feasible) resource of the control channel after transmitting the random access preamble.

In one or more of the above-disclosed methods, preferably monitoring the control channel immediately after transmitting the random access preamble means that the UE starts monitoring the control channel as soon as possible after transmitting the random access preamble.

In one or more of the above-disclosed methods, preferably the UE starts monitoring a control channel for receiving a random access response when a random access procedure is initiated.

In one or more of the above-disclosed methods, preferably the UE considers the random access procedure completed successfully in response to receiving the random access response (or the indication).

In one or more of the above-disclosed methods, preferably the UE stops transmitting a random access preamble for the system information request in response to receiving the random access response (or the indication).

In one or more of the above-disclosed methods, preferably the UE stops monitoring a control channel for receiving a random access response in response to receiving the random access response (or the indication).

In one or more of the above-disclosed methods, preferably the UE stops the random access procedure if the UE detects, based on minimum system information, that the system information is or will be broadcasted.

In one or more of the above-disclosed methods, preferably the UE stops the random access procedure by resetting the MAC.

In one or more of the above-disclosed methods, preferably the UE resets the MAC in response to receiving the random access response (or the indication).

In one or more of the above-disclosed methods, preferably the UE does not monitor a control channel for receiving a random access response before transmitting a random access preamble during a random access procedure which is not for the system information request.

In one or more of the above-disclosed methods, preferably the UE does not monitor a control channel for receiving a random access response before the round trip time after transmitting a random access preamble during a random access procedure which is not for system information request, e.g. due to uplink data arrival.

In one or more of the above-disclosed methods, preferably the control channel indicates the scheduling information of the random access response.

In one or more of the above-disclosed methods, preferably the control channel is a PDCCH.

In one or more of the above-disclosed methods, preferably the UE monitors RA-RNTI for the random access response.

In one or more of the above-disclosed methods, preferably the random access response corresponds to the random access preamble transmitted by the UE. Alternatively preferably, the random access response corresponds to the random access preamble for the system information request.

In one or more of the above-disclosed methods, preferably the UE initiates the random access procedure for the system information request when the UE requires some system information which is not broadcasted.

In one or more of the above-disclosed methods, preferably the system information scheduling period is a period that the scheduling information of the system information is broadcasted.

In one or more of the above-disclosed methods, preferably the system information or the set of system information is Other SI.

In one or more of the above-disclosed methods, preferably the system information or the set of system information can be requested on demand.

In one or more of the above-disclosed methods, preferably the UE is in an inactive mode or an idle mode.

In one or more of the above-disclosed methods, preferably the UE does not initiate a random access procedure for the system information request when the UE is in connected mode.

In one or more of the above-disclosed methods, preferably the UE does not transmit a random access preamble for the system information request when the UE is in connected.

In one or more of the above-disclosed methods, preferably the UE is a NR UE.

In one or more of the above-disclosed methods, preferably the network node is a TRP, gNB, or a cell.

Referring back to FIGS. 3 and 4, preferably, the device 300 includes a program code 312 stored in memory 310. The CPU 308 could execute program code 312 to enable the network (i) to initiate a random access procedure to request a system information; (ii) to transmits a random access preamble during the random access procedure; and (iii) to monitor a control channel for a random access response immediately after transmitting the random access preamble for a request of the system information.

Furthermore, the CPU 308 can execute the program code 312 to perform all of the above-described actions and steps or others methods described herein.

Based on above-disclosed methods, system information requests and responses can be more resource efficient. Additionally, unnecessary transmissions of system information requests can be reduced.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for a user equipment, in the following also referred to as UE, the method comprising:

   determining whether to request a first set or a second set of system information from a network node;
   initiating a random access procedure for system information request; and
   transmitting, to the network node, a random access preamble, for the system information request, on a first radio resource or a second radio resource based on whether to request the first set or the second set,
   **characterized by**
   receiving an indication in a random access response, wherein the indication indicates which set of system information is to be provided;
   considering the random access procedure completed successfully in response to receiving the indication; and
   receiving the requested set of system information after receiving the indication.

2. The method of claim 1, further comprising: receiving, from the network node, an association between the first set and the first radio resource, and an association between the second set and the second radio resource.

3. The method of claim 1 or 2, wherein the UE transmits the random access preamble on the first radio resource if the first set is requested, and the UE transmits the random access preamble on the second radio resource if the second set is requested.

4. The method of any one of claims 1 to 3, wherein the UE initiates the random access procedure for the system information request when the UE requires system information not broadcasted by the network node.

5. The method of any one of claims 1 to 4, wherein the UE does not transmit the random access preamble for the system information request when the UE is in RRC_CONNECTED.

6. A method for a network node, the method comprising:

   receiving, from a user equipment, in the following also referred to as UE, a random access preamble for system information request; and
   broadcasting a first set or a second set of system information based on whether the random access preamble is received on a first radio resource or a second radio resource,
   **characterized by**
   transmitting an indication in a random access response, wherein the indication indicates which set of system information is to be provided; and
transmitting the requested set of system information after transmitting the indication.

7. The method of claim 6, further comprising: providing, to the UE, an association between the first set and the first radio resource, and an association between the second set and the second radio resource.

8. The method of claim 6 or 7, wherein the network node broadcasts the first set if the random access preamble is received on the first radio resource, and broadcasts the second set if the random access preamble is received on the second radio resource.

9. The method of claim 2 or 7, wherein the association is provided by a specific system information that comprises information required for initial access to a cell.

10. The method of claim 9, wherein the specific system information provides scheduling information for other system information.

11. The method of any one of claims 1 to 10, wherein the first radio resource and the second radio resource are different Physical Random Access Channel, in the following also referred to as PRACH, time and/or frequency resources.

12. The method of any one of claims 1 to 11, wherein preamble sequence of the random access preamble to be transmitted on the first radio resource and preamble sequence of the random access preamble to be transmitted on the second radio resource are the same.

13. The method of any one of claims 1 to 12, wherein the UE is in RRC_IDLE or RRC_INACTIVE.

14. The method of any one of claims 1 to 13, wherein the random access preamble is a first random access preamble if the first set of system information is requested and the random access preamble is a second random access preamble if the second set of system information is requested, and
wherein the indication indicates which set of system information is to be provided through indicating which random access preamble for the system information request has been received by the network node.

15. A user equipment, in the following also referred to as UE, comprising:

a control circuit (306);
a processor (308) installed in the control circuit (306); and
a memory (310) installed in the control circuit (306) and coupled to the processor (308);
**characterized in that** the processor (308) is configured to execute a program code (312) stored in the memory (310) to perform the method steps as defined in any one of claims 1 to 5, claims 9 and 10 in combination with claim 2, and claims 11 to 14 in combination with any one of claims 1 to 5, and 9 and 10 in combination with claim 2.

16. A network node, comprising:

a control circuit (306);
a processor (308) installed in the control circuit (306); and
a memory (310) installed in the control circuit (306) and coupled to the processor (308);
**characterized in that** the processor (308) is configured to execute a program code (312) stored in the memory (310) to perform the method steps as defined in any one of claims 6 to 8, claims 9 and 10 in combination with claim 7, and claims 11 to 14 in combination with any one of claims 6 to 8, and 9 and 10 in combination with claim 7.

**Patentansprüche**

1. Verfahren für eine Teilnehmerausrüstung, im Folgenden auch als UE bezeichnet, wobei das Verfahren umfasst:

Feststellen, ob ein erster Satz oder ein zweiter Satz von Systeminformationen von einem Netzwerkknoten anzufordern ist;
Initiieren einer Zufallszugriffsprozedur für eine Systeminformationsanfrage; und
Senden einer Zufallszugriffspräambel für die Systeminformationsanfrage an den Netzwerkknoten auf einer ersten Funk-Ressource oder einer zweiten Funk-Ressource basierend darauf, ob der erste Satz oder der zweite Satz anzufordern ist,

**gekennzeichnet durch**

Empfangen einer Angabe in einer Zufallszugriffsantwort, wobei die Angabe anzeigt, welcher Satz von Systeminformationen bereitzustellen ist;

Prüfen, ob die Zufallszugriffsprozedur erfolgreich vollendet ist, als Reaktion auf das Empfangen der Angabe; und

Empfangen des angeforderten Satzes von Systeminformationen nach dem Empfangen der Angabe.

2. Verfahren gemäß Anspruch 1, weiter umfassend: Empfangen einer Verknüpfung zwischen dem ersten Satz und der ersten Funk-Ressource sowie einer Verknüpfung zwischen dem zweiten Satz und der zweiten Funk-Ressource von dem Netzwerkknoten.

3. Verfahren gemäß Anspruch 1 oder 2, wobei die UE die Zufallszugriffspräambel auf der ersten Funk-Ressource sendet, wenn der erste Satz angefordert wird, und die UE die Zufallszugriffspräambel auf der zweiten Funk-Ressource sendet, wenn der zweite Satz angefordert wird.

4. Verfahren gemäß einem der Ansprüche 1 bis 3, wobei die UE die Zufallszugriffsprozedur für die Systeminformationsanfrage initiiert, wenn die UE Systeminformationen benötigt, die nicht durch den Netzwerkknoten rundgesendet werden.

5. Verfahren gemäß einem der Ansprüche 1 bis 4, wobei die UE die Zufallszugriffspräambel für die Systeminformationsanfrage nicht sendet, wenn sich die UE im Zustand RRC_CONNECTED befindet.

6. Verfahren für einen Netzwerkknoten, wobei das Verfahren umfasst:

Empfangen einer Zufallszugriffspräambel für eine Systeminformationsanfrage von einer Teilnehmerausrüstung, im Folgenden auch als UE bezeichnet; und

Rundsenden eines ersten Satzes oder eines zweiten Satzes von Systeminformationen basierend darauf, ob die Zufallszugriffspräambel auf einer ersten Funk-Ressource oder einer zweiten Funk-Ressource empfangen wird,

**gekennzeichnet durch**

Senden einer Angabe in einer Zufallszugriffsantwort, wobei die Angabe anzeigt, welcher Satz von Systeminformationen bereitzustellen ist; und

Senden des angeforderten Satzes von Systeminformationen nach dem Senden der Angabe.

7. Verfahren gemäß Anspruch 6, weiter umfassend: Bereitstellen einer Verknüpfung zwischen dem ersten Satz und der ersten Funk-Ressource sowie einer Verknüpfung zwischen dem zweiten Satz und der zweiten Funk-Ressource an die UE.

8. Verfahren gemäß Anspruch 6 oder 7, wobei der Netzwerkknoten den ersten Satz rundsendet, wenn die Zufallszugriffspräambel auf der ersten Funk-Ressource empfangen wird, und den zweiten Satz rundsendet, wenn die Zufallszugriffspräambel auf der zweiten Funk-Ressource empfangen wird.

9. Verfahren gemäß Anspruch 2 oder 7, wobei die Verknüpfung durch eine spezifische Systeminformation bereitgestellt wird, welche Informationen umfasst, die für einen initialen Zugriff auf eine Zelle benötigt werden.

10. Verfahren gemäß Anspruch 9, wobei die spezifischen Systeminformationen Zeitplanungsinformationen für andere Systeminformationen bereitstellen.

11. Verfahren gemäß einem der Ansprüche 1 bis 10, wobei die erste Funk-Ressource und die zweite Funk-Ressource unterschiedliche Physical-Random-Access-Channel, im Folgenden auch als PRACH bezeichnet, -Zeit- und/oder Frequenz-Ressourcen sind.

12. Verfahren gemäß einem der Ansprüche 1 bis 11, wobei eine Präambelsequenz der Zufallszugriffspräambel, die auf der ersten Funk-Ressource zu senden ist, und eine Präambelsequenz der Zufallszugriffspräambel, die auf der zweiten Funk-Ressource zu senden ist, gleich sind.

13. Verfahren gemäß einem der Ansprüche 1 bis 12, wobei sich die UE in einem Zustand RRC_IDLE oder RRC_INACTIVE befindet.

14. Verfahren gemäß einem der Ansprüche 1 bis 13, wobei die Zufallszugriffspräambel eine erste Zufallszugriffspräambel ist, wenn der erste Satz von Systeminformationen angefordert wird, und die Zufallszugriffspräambel eine zweite Zufallszugriffspräambel ist, wenn der zweite Satz von Systeminformationen angefordert wird, und wobei die Angabe anzeigt, welcher Satz von Systeminformationen bereitzustellen ist, durch Anzeigen, welche Zufallszugriffspräambel für die Systeminformationsanfrage von dem Netzwerkknoten empfangen worden ist.

15. Teilnehmerausrüstung, im Folgenden auch als UE bezeichnet, aufweisend:

   eine Steuerungsschaltung (306);
   einen Prozessor (308), der in der Steuerungsschaltung (306) installiert ist; und
   einen Speicher (310), der in der Steuerungsschaltung (306) installiert und mit dem Prozessor (308) verbunden ist;
   **dadurch gekennzeichnet, dass** der Prozessor (308) ausgelegt ist, einen Programm-Code (312), der in dem Speicher (310) gespeichert ist, auszuführen, um die in einem der Ansprüche 1 bis 5, Ansprüche 9 und 10 in Verbindung mit Anspruch 2, und Ansprüche 11 bis 14 in Verbindung mit einem der Ansprüche 1 bis 5, und 9 und 10 in Verbindung mit Anspruch 2 definierten Verfahrensschritte auszuführen.

16. Netzwerkknoten, aufweisend:

   eine Steuerungsschaltung (306);
   einen Prozessor (308), der in der Steuerungsschaltung (306) installiert ist; und
   einen Speicher (310), der in der Steuerungsschaltung (306) installiert und mit dem Prozessor (308) verbunden ist;
   **dadurch gekennzeichnet, dass** der Prozessor (308) ausgelegt ist, einen Programm-Code (312), der in dem Speicher (310) gespeichert ist, auszuführen, um die in einem der Ansprüche 6 bis 8, Ansprüche 9 und 10 in Verbindung mit Anspruch 7, und Ansprüche 11 bis 14 in Verbindung mit einem der Ansprüche 6 bis 8, und 9 und 10 in Verbindung mit Anspruch 7 definierten Verfahrensschritte auszuführen.

**Revendications**

1. Procédé pour un équipement utilisateur, également désigné ci-après par UE, le procédé comprenant le fait :

   de déterminer s'il faut demander un premier ou un deuxième ensemble d'informations système à partir d'un nœud de réseau ;
   de lancer une procédure d'accès aléatoire pour la demande d'informations système ; et
   de transmettre, au nœud de réseau, un préambule d'accès aléatoire, pour la demande d'informations système, sur une première ressource radio ou une deuxième ressource radio selon qu'il faut demander le premier ensemble ou le deuxième ensemble,
   **caractérisé par** le fait
   de recevoir une indication dans une réponse d'accès aléatoire, où l'indication indique quel ensemble d'informations système doit être fourni ;
   de considérer que la procédure d'accès aléatoire s'est terminée avec succès en réponse à la réception de l'indication ; et
   de recevoir l'ensemble demandé d'informations système après avoir reçu l'indication.

2. Procédé de la revendication 1, comprenant en outre le fait : de recevoir, à partir du nœud de réseau, une association entre le premier ensemble et la première ressource radio, et une association entre le deuxième ensemble et la deuxième ressource radio.

3. Procédé de la revendication 1 ou 2, dans lequel l'UE transmet le préambule d'accès aléatoire sur la première ressource radio si le premier ensemble est demandé, et l'UE transmet le préambule d'accès aléatoire sur la deuxième ressource radio si le deuxième ensemble est demandé.

4. Procédé de l'une quelconque des revendications 1 à 3, dans lequel l'UE lance la procédure d'accès aléatoire pour la demande d'informations système lorsque l'UE a besoin d'informations système non diffusées par le nœud de réseau.

**5.** Procédé de l'une quelconque des revendications 1 à 4, dans lequel l'UE ne transmet pas le préambule d'accès aléatoire pour la demande d'informations système lorsque l'UE est dans un état RRC_CONNECTED.

**6.** Procédé pour un nœud de réseau, le procédé comprenant le fait :

de recevoir, à partir d'un équipement utilisateur, également désigné ci-après par UE, un préambule d'accès aléatoire pour une demande d'informations système ; et
de diffuser un premier ensemble ou un deuxième ensemble d'informations système selon que le préambule d'accès aléatoire est reçu sur une première ressource radio ou une deuxième ressource radio,
**caractérisé par** le fait
de transmettre une indication dans une réponse d'accès aléatoire, où l'indication indique quel ensemble d'informations système doit être fourni ; et
de transmettre l'ensemble demandé d'informations système après avoir transmis l'indication.

**7.** Procédé de la revendication 6, comprenant en outre le fait : de fournir, à l'UE, une association entre le premier ensemble et la première ressource radio, et une association entre le deuxième ensemble et la deuxième ressource radio.

**8.** Procédé de la revendication 6 ou 7, dans lequel le nœud de réseau diffuse le premier ensemble si le préambule d'accès aléatoire est reçu sur la première ressource radio, et diffuse le deuxième ensemble si le préambule d'accès aléatoire est reçu sur la deuxième ressource radio.

**9.** Procédé de la revendication 2 ou 7, dans lequel l'association est fournie par des informations système spécifiques qui comprennent des informations nécessaires pour un accès initial à une cellule.

**10.** Procédé de la revendication 9, dans lequel les informations système spécifiques fournissent des informations de planification pour d'autres informations système.

**11.** Procédé de l'une quelconque des revendications 1 à 10, dans lequel la première ressource radio et la deuxième ressource radio sont des ressources différentes temporelles et/ou fréquentielles de Canal d'Accès Aléatoire Physique, également désigné ci-après par PRACH.

**12.** Procédé de l'une quelconque des revendications 1 à 11, dans lequel la séquence de préambule du préambule d'accès aléatoire à transmettre sur la première ressource radio et la séquence de préambule du préambule d'accès aléatoire à transmettre sur la deuxième ressource radio sont identiques.

**13.** Procédé de l'une quelconque des revendications 1 à 12, dans lequel l'UE est dans un état RRC_IDLE ou RRC_INACTIVE.

**14.** Procédé de l'une quelconque des revendications 1 à 13, dans lequel le préambule d'accès aléatoire est un premier préambule d'accès aléatoire si le premier ensemble d'informations système est demandé et le préambule d'accès aléatoire est un deuxième préambule d'accès aléatoire si le deuxième ensemble d'informations système est demandé, et
dans lequel l'indication indique quel ensemble d'informations système doit être fourni en indiquant quel préambule d'accès aléatoire pour la demande d'informations système a été reçu par le nœud de réseau.

**15.** Équipement utilisateur, également désigné ci-après par UE, comprenant :

un circuit de commande (306) ;
un processeur (308) installé dans le circuit de commande (306) ; et
une mémoire (310) installée dans le circuit de commande (306) et couplée au processeur (308) ;
**caractérisé en ce que** le processeur (308) est configuré pour exécuter un code de programme (312) stocké dans la mémoire (310) pour effectuer les étapes du procédé telles que définies dans l'une quelconque parmi les revendications 1 à 5, les revendications 9 et 10 en combinaison avec la revendication 2 et les revendications 11 à 14 en combinaison avec l'une quelconque des revendications 1 à 5, et 9 et 10 en combinaison avec la revendication 2.

**16.** Nœud de réseau, comprenant :

un circuit de commande (306) ;
un processeur (308) installé dans le circuit de commande (306) ; et
une mémoire (310) installée dans le circuit de commande (306) et couplée au processeur (308) ;
**caractérisé en ce que** le processeur (308) est configuré pour exécuter un code de programme (312) stocké dans la mémoire (310) pour effectuer les étapes du procédé telles que définies dans l'une quelconque parmi les revendications 6 à 8, les revendications 9 et 10 en combinaison avec la revendication 7 et les revendications 11 à 14 en combinaison avec l'une quelconque des revendications 6 à 8, et 9 et 10 en combinaison avec la revendication 7.

**FIG. 1**

**FIG. 2**

EP 3 474 624 B1

*300*

```
┌─────────────────────────────────────────────────┐
│   ┌──────────────┐      ┌──────────────┐         │
│   │  INPUT       │      │  OUTPUT      │         │
│   │  DEVICE      │      │  DEVICE      │         │
│   │  302         │      │  304         │         │
│   └──────────────┘      └──────────────┘         │
│          ↕                     ↕                  │
│   ┌─────────────────────────────────────────┐    │
│   │  CONTROL CIRCUIT 306                     │    │
│   │   ┌────────────────────────────────┐    │    │
│   │   │        CPU 308                  │    │    │
│   │   └────────────────────────────────┘    │    │
│   │                 ↕                        │    │
│   │   ┌────────────────────────────────┐    │    │
│   │   │      MEMORY 310                 │    │    │
│   │   │  ┌──────────────────────────┐  │    │    │
│   │   │  │  PROGRAM CODE 312         │  │    │    │
│   │   │  └──────────────────────────┘  │    │    │
│   │   └────────────────────────────────┘    │    │
│   └─────────────────────────────────────────┘    │
│                    ↕                              │
│   ┌─────────────────────────────────────────┐    │
│   │       TRANSCEIVER 314                    │    │
│   └─────────────────────────────────────────┘    │
└─────────────────────────────────────────────────┘
```

FIG. 3

PROGRAM CODE *312*

APPLICATION LAYER *400*

LAYER 3 *402*

LAYER 2 *404*

LAYER 1 *406*

FIG. 4

**FIG. 5**

Core

Core

NR BS

NR BS

Site A

LTE — NR

Site B

LTE — NR

Core

Central Unit/Centralised
RAN Processing

High
Performance
Transport

High
Performance
Transport

High
Performance
Transport

Lower
Layers of
NR BS

Lower
Layers of
NR BS

Lower
Layers of
NR BS

# FIG. 6

FIG. 7

eNB (Macro)

Different deployment scenarios with Single TRP cell

**FIG. 8**

Different deployment scenarios with multiple TRPs Cell

FIG. 9

EP 3 474 624 B1

5G Node

FIG. 10

FIG. 11

UE              eNB

(1) ————Random Access Preamble———▶

◀————Random Access Response———— (2)

(3) ————Scheduled Transmission———▶

◀————Contention Resolution———— (4)

# FIG. 12

UE                                          eNB

(0) ◄——RA Preamble assignment——

——Random Access Preamble——► (1)

(2) ◄——Random Access Response——

# FIG. 13

| E | T | RAPID | Oct 1 |

## FIG. 14

| E | T | R | R | BI | Oct 1 |

## FIG. 15

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| Temporary C-RNTI | | Oct 5 |
| Temporary C-RNTI | | Oct 6 |

## FIG. 16

| | | |
|---|---|---|
| R | Timing Advance Command | Oct 1 |
| Timing Advance Command | UL Grant | Oct 2 |
| UL Grant | | Oct 3 |
| Temporary C-RNTI | | Oct 4 |
| Temporary C-RNTI | | Oct 5 |

## FIG. 17

| E/T/R/R/BI subheader | E/T/RAPID subheader 1 | E/T/RAPID subheader 2 | ... | E/T/RAPID subheader n |
|---|---|---|---|---|

| MAC header | MAC RAR 1 | MAC RAR 2 | ... | MAC RAR n | Padding (opt) |
|---|---|---|---|---|---|

◄────────────MAC payload────────────►

**FIG. 18**

SI scheduling info

SI scheduling period

Requested SI

NW

SI request / RAR

UE 1

SI request / RAR

UE 2

**FIG. 19**

**FIG. 20**

**FIG. 21**

2200

START

2205

The UE initiates a random access procedure to request a system information

2210

The UE transmits a random access preamble during the random access procedure

2215

The UE monitors a control channel for a random access response immediately after transmitting the random access preamble for a request of the system information

END

FIG. 22

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016198909 A1

**Non-patent literature cited in the description**

- Beam support in NR. *R2-162709*
- Study on New Radio Access Technology; Radio Access Architecture and Interfaces. *R3-160947, TR 38.801 V0.1.0*
- Summary of email discussion [93bis#23][NR] Deployment scenarios. *R2-164306*
- Study on New Radio Access Technology; Radio Interface Protocol Aspects (Release 14). *RAN2#94 meeting minutes; TR 38.804 v0.8.0*
- E-UTRA; MAC protocol specification. *TS 36.321 V14.1.0*
- E-UTRA Physical layer procedures. *TS 36.213 V14.1.0*
- E-UTRA and E-UTRAN; Overall description; Stage 2. *TS 36.300 V14.1.0*
- E-UTRA; RRC protocol specification. *TS 36.331 V14.0.0*